# EUROPÄISCHE PATENTSCHRIFT

(11) **EP 3 685 550 B1**
(45) Veröffentlichungstag und Bekanntmachung des Hinweises auf die Patenterteilung: **13.04.2022**
(21) Anmeldenummer: 18759884.2
(22) Anmeldetag: 15.08.2018
(51) Int. Cl.: H04L 12/40, H04L 12/66

(54) **DATENSYSTEM, DATENÜBERTRAGUNGSSYSTEM SOWIE VERFAHREN ZUR DATENÜBERTRAGUNG FÜR EIN ZUG-FAHRZEUG UND/ODER ANHÄNGER-FAHRZEUG**
DATA SYSTEM, DATA TRANSMISSION SYSTEM AND METHOD FOR DATA TRANSMISSION FOR A TOWING VEHICLE AND/OR TRAILER VEHICLE
SYSTÈME DE DONNÉES, SYSTÈME DE TRANSMISSION DE DONNÉES AINSI QUE PROCÉDÉ DE TRANSMISSION DE DONNÉES POUR UN VÉHICULE TRACTEUR ET/OU UN VÉHICULE TRACTÉ

(30) Priorität: 20.09.2017 DE 102017008870; 09.11.2017 DE 102017010356
(43) Veröffentlichungstag der Anmeldung: 29.07.2020
(73) Patentinhaber: ZF CV Systems Europe BV, 1170 Brussels (BE)
(72) Erfinder: DIECKMANN, Thomas, 30982 Pattensen (DE); GOERS, Andreas, 30982 Pattensen (DE); KÜHNE, Sebastian, 31157 Sarstedt (DE); LÜLFING, Ralph-Carsten, 30826 Garbsen (DE); MICHEL, Marco, 30627 Hannover (DE); WOLF, Thomas, 30890 Barsinghausen (DE); WULF, Oliver, 31535 Neustadt (DE)
(74) Vertreter: Rabe, Dirk-Heinrich
(86) Internationale Anmeldenummer: PCT/EP2018/072100
(87) Internationale Veröffentlichungsnummer: WO 2019/057403

(56) Entgegenhaltungen:
- WO-A1-2015/074938
- DE-A1-102006 023 137
- DE-A1-102011 006 827
- DE-B3-102004 035 255

## Beschreibung

Die Erfindung betrifft ein Datensystem und ein Datenübertragungssystem mit jeweils einen Datensystem jeweils für ein Zug-Fahrzeug und/oder Anhänger-Fahrzeug, insbesondere für Nutzfahrzeuge wie ein Lastkraftwagen oder Lastkraftwagen-Anhänger oder ein Personenbus oder Personenbus-Anhänger. Die Erfindung betrifft dazu ein Datensystem nach dem Oberbegriff des Anspruchs 1, ein Datenübertragungssystem nach dem Oberbegriff des Anspruchs 10 und ein Zug-Fahrzeug und/oder Anhänger-Fahrzeug nach Anspruch 20. Die Erfindung betrifft weiter ein entsprechendes Verfahren zur Datenübertragung für ein Zug-Fahrzeug und/oder Anhänger-Fahrzeug gemäß dem Oberbegriff des Anspruchs 13.

Ein solches eingangs genanntes Datensystem weist üblicherweise auf:
- eine Steuereinrichtung,
- ein Sensorsystem zur Aufnahme und Verarbeitung von Sensordaten,
- ein BUS-System zur Übermittlung der Sensordaten zwischen der Steuereinrichtung und dem Sensorsystem,
- eine Schnittstelle des BUS-Systems zur Übermittlung der Sensordaten an eine Schnittstelle eines BUS-System eines jeweils anderen Datensystems des Zug-Fahrzeugs und/oder Anhänger-Fahrzeugs im Rahmen eines Datenübertragungssystems, wobei
- das BUS-System eine erste BUS-Einrichtung in Form eines CAN-BUS aufweist.

Im Rahmen des Datenübertragungssystems ist regelmäßig vorgesehen, dass das Datenübertragungssystem ein solches Datensystem jeweils für ein Zug-Fahrzeug und/oder Anhänger-Fahrzeug aufweist, wobei das Datensystem des Zug-Fahrzeug und/oder Anhänger-Fahrzeug jeweils aufweist:
- eine Steuereinrichtung,
- ein Sensorsystem zur Aufnahme und Verarbeitung von Sensordaten,
- ein BUS-System zur Übermittlung der Sensordaten zwischen der Steuereinrichtung und dem Sensorsystem,
- eine Schnittstelle des BUS-Systems zur Übermittlung der Sensordaten an eine Schnittstelle eines BUS-System des jeweils anderen Datensystems des Zug-Fahrzeugs und/oder Anhänger-Fahrzeugs im Rahmen des Datenübertragungssystems, und
das Datenübertragungssystem aufweist:
- eine Datenverbindung zwischen der Schnittstelle des Zug-Fahrzeug und der der Schnittstelle des Anhänger-Fahrzeugs, wobei
- das BUS-System jeweils die erste BUS-Einrichtung in Form eines CAN-BUS aufweist.

Es ist also ein erstes eingangs genanntes Datensystem vorgesehen, das aufweist:
- eine erste Steuereinrichtung,
- ein erstes Sensorsystem zur Aufnahme und Verarbeitung von Sensordaten,
- ein erstes BUS-System zur Übermittlung der Sensordaten zwischen der Steuereinrichtung und dem Sensorsystem,
- eine erste Schnittstelle des BUS-Systems zur Übermittlung der Sensordaten an eine zweite Schnittstelle eines zweiten BUS-System eines jeweils anderen zweiten Datensystems des Zug-Fahrzeugs und/oder Anhänger-Fahrzeugs im Rahmen eines Datenübertragungssystems, wobei
- das erste BUS-System eine erste BUS-Einrichtung in Form eines CAN-BUS aufweist.

Ebenso ist ein zweites eingangs genanntes Datensystem vorgesehen, das aufweist:
- eine zweite Steuereinrichtung,
- ein zweites Sensorsystem zur Aufnahme und Verarbeitung von Sensordaten,
- ein zweites BUS-System zur Übermittlung der Sensordaten zwischen der Steuereinrichtung und dem Sensorsystem,
- eine zweite Schnittstelle des BUS-Systems zur Übermittlung der Sensordaten an die oben genannte erste Schnittstelle des ersten BUS-System eines jeweils anderen ersten Datensystems des Zug-Fahrzeugs und/oder Anhänger-Fahrzeugs im Rahmen eines Datenübertragungssystems, wobei
- das zweite BUS-System eine weitere erste BUS-Einrichtung in Form eines CAN-BUS aufweist.

Technisch gesehen handelt es sich bei einem CAN-BUS (Controller Area Net-work)-Bus um einen asynchrones, zeitlich versetztes, serielles BUS-System, das in den 80er Jahren für die Vernetzung von Steuergeräten im automotiven Bereich entwickelt wurde. Zweck dieses CAN- BUS-Systems ist es, Kabelbäume zu reduzieren und dadurch Gewicht zu sparen. Anstelle der Verwendung eines elektrischen Schaltkreises je übertragenem Signal basiert die BUS-Einrichtung in Form eines CAN-BUS auf einer Kommunikationsplattform, welche die Übergabe von Botschaften zwischen einzelnen Geräten übernimmt. Durch die Umsetzung aller Steuersignale in Botschaften, ist eine verbesserte Intelligenz der verbundenen Geräte erforderlich - im Gegenzug können aber viele Geräte quasi gleichzeitig Information über wenige Kabelverbindungen austauschen. Inzwischen können bei größeren Systemen durchaus komplexere Informationen ausgetauscht werden, die beispielsweise Radverschleiß, Geschwindigkeiten oder sonstige komplexe Fahrzeugdaten betreffen.

Bei der datentechnischen Kopplung von Zug-Fahrzeug und Anhänger-Fahrzeug, insbesondere im Nutzfahrzeugbereich, wie beispielsweise der datentechnische Kopplung eines Lastkraftwagens mit einem Anhänger, hat sich der standardisierte ISO-CAN-BUS etabliert; dieser ist in verschiedensten ISO-Normierungen beschrieben und ausführlich definiert. Vor allem die ISO 11992 mit anhängigen Erweiterungen definiert CAN-basierte Fahrzeug-BUS-Standards für Nutzfahrzeuganwendungen einer Zugmaschine mit einem oder mehreren Anhängern (Titel : *Road vehicles and interchange of digital information on electrical connections between towing and towed vehicles*). Die Protokollstruktur ist ähnlich dem Standard SAE J1939, unterscheidet sich jedoch teilweise in Taktung, Zeitabläufen und Spannungspegeln der Struktur, bzw. den Nachrichtenidentifikationen.

Solche CAN-BUS-basierte Datensysteme und Datenübertragungssysteme zwischen Zug-Fahrzeug und Anhänger-Fahrzeug haben sich mittlerweile durchgesetzt und seit Jahrzehnten bewährt im automotiven Bereich, auch bei zunehmender Zahl und Komplexität der verbundenen Geräte im Fahrzeug, bzw. zunehmender Komplexität der Steuereinrichtungen, seien es zentrale oder dezentrale Steuereinrichtungssysteme.

Allerdings hat sich die aufkommende Datenmenge am Fahrzeug inzwischen in vielerlei Hinsicht in andere Dimensionen und entsprechend gestiegenen qualitativen Erfordernissen entwickelt - wünschenswert ist es, Datenmengen von wenigstens bis zu 100 Mbit/s oder mehr mit entsprechend hoher Geschwindigkeit übertragen zu können. Hier erweisen sich die bislang zur Verfügung stehenden Prinzipien eines CAN-BUS-basierten Datensystems als unzureichend. Insbesondere die Übertragung zwischen dem ersten Datensystem eines Anhängers und dem zweiten Datensystem einer Zugmaschine erweist sich in vielerlei Hinsicht als Engstelle für eine datentechnische Bewältigung der anfallenden Daten am Anhänger und/oder am Zugfahrzeug.

Dies betrifft insbesondere die inzwischen an Bedeutung gewinnenden Fahrerassistenzsysteme (Advanced Driver Assistance Systems, ADAS*)* oder Systeme betreffend das automatisierte Fahren (Automated Driving, AD). Zum einen greifen solche Systeme nicht mehr nur auf Sensordaten eines einzelnen Fahrzeugs zurück und machen insofern eine schnelle Aufnahmeverarbeitung und Übermittlung von Sensordaten in einem Sensorsystem erforderlich, sondern auch eben die Übertragung mit entsprechenden Übertragungsraten zwischen einem ersten und einem zweiten Sensor- bzw. Datensystem in einem entsprechenden Datenübertragungssystem für Zug-Fahrzeug und Anhänger-Fahrzeug .

Bisher entwickelte Alternativen zu CAN-BUS-basierten Datensystemen wie etwa eine leistungsbasierte Kommunikation (Powerline Communication, PLC) nach SAE J24997 oder dergleichen oder ein Ausbau der CAN-BUS-Systeme etwa nach ISO 11992 oder dergleichen haben die oben aufgezeigten Begrenzungen hinsichtlich der Datenrate und Echtzeitübertragung von Daten --wie etwa Kameradaten, Lidar- oder Radardaten-- oder Hilfslösungen, die etwa durch zusätzliche Verkabelungen, Stecker oder dergleichen Kopplungen bereitgestellt werden, werden von Kunden nur ungern akzeptiert, da sie die Komplexität der Systeme und den Aufwand zur Pflege derselben erhöht.

Alternativen bieten Datenübertragungssysteme mit höheren Übertragungsraten wie etwa Broadcasting-Lösungen, die beispielsweise radiobasiert sein können oder Peer-to-Peer-basierte Lösungen wie etwa Car-to-Car oder Car-to-X-Kommunikationen sind von anderen Voraussetzungen abhängig, die nicht flächendeckend zur Verfügung stehen oder leiden unter begrenzter Verlässlichkeit und Übertragungszuverlässigkeit. So ist es regelmäßig mit Aufwand verbunden, solche Systeme zu "paaren" (*pairing*) und zudem sind die "Pairing"-Verbindungen datentechnisch unsicher und auch leicht zu stören, bzw. zu manipulieren. All dieses spricht gegen solche Alternativen in der breitbandigen und schnellen echtzeitfähigen Datenübertragung zwischen Zug-Fahrzeug und Anhänger-Fahrzeug.

DE 10 2006 023 137 A1 offenbart ein Verfahren und eine Vorrichtung zum Betrieb eines Bus-Systems in einem Fahrzeug, wobei es sich bei dem Bus-System um einen MOST-Bus (von engl. *Media Oriented Systems Transport*) handelt. Der MOST-Bus weist ein Gateway auf, über das der MOST-Bus mit einem anderen Bussystem verbunden werden kann. Das Gateway weist eine Ethernet-Schnittstelle und eine CAN-Schnittstelle auf, sodass Daten zwischen dem MOST-Bus und dem Gateway über die Ethernet-Schnittstelle oder die CAN-Schnittstelle ausgetauscht werden. Zwischen der CAN-Schnittstelle und der Ethernet-Schnittstelle kann bei Bedarf umgeschaltet werden. Das Umschalten erfolgt abhängig von Betriebszuständen des Fahrzeugs. In einem normalen Betriebszustand des Fahrzeugs können Daten zwischen dem MOST-Bus und dem Gateway über die CAN-Schnittstelle ausgetauscht werden. In einem Produktions- oder Service-Betriebszustand, z. B. während eines Service in einer Werkstatt, können Daten zwischen dem MOST-Bus und dem Gateway über die CAN-Schnittstelle ausgetauscht werden.

Wünschenswert ist es, ein Datensystem und ein Datenübertragungssystem mit jeweils einem Datensystem jeweils für ein Zug-Fahrzeug und/oder Anhänger-Fahrzeug zur Verfügung zu stellen, das basierend auf den bisher etablierten Strukturen einer BUS-Einrichtung in Form eines CAN-BUS für ein Datensystem mit einer höhere Datenübertragung und/oder Echtzeitfähigkeit, insbesondere mit verlässlichem Sicherheitsstandard, etabliert werden kann. Insbesondere sollte ein Datenübertragungssystem eines oder mehrere der oben adressierten Probleme in verbesserter Weise lösen.

An dieser Stelle setzt die Erfindung an, deren Aufgabe es ist, ein Datensystem und ein Datenübertragungssystem sowie ein Zug-Fahrzeug und/oder Anhänger-Fahrzeug mit jeweils einem solchen Datensystem anzugeben und ein Verfahren zur Datenübertragung für ein Zug-Fahrzeug und/oder Anhänger-Fahrzeug anzugeben, das basierend auf einer Steuereinrichtung, einem Sensorsystem sowie einem BUS-System in Form eines CAN-BUS und einer Schnittstelle des BUS-Systems zur Übermittlung der Sensordaten aufsetzt. Ein Datensystem und ein Datenübertragungssystem bzw. eine entsprechende Datenübertragung soll hinsichtlich Menge und/oder zeitlicher ÜbertragungsFähigkeit verbessert sein.

Die Aufgabe betreffend das Datensystem eines Zug-Fahrzeug und/oder Anhänger-Fahrzeug, insbesondere für Nutzfahrzeuge wie ein Lastkraftwagen oder Lastkraftwagen-Anhänger oder ein Personenbus oder Personenbus-Anhänger, wird mit einem Datensystem des Anspruchs 1 gelöst.

Die Aufgabe betreffend das Datenübertragungssystem eines Zug-Fahrzeug und Anhänger-Fahrzeug, insbesondere für Nutzfahrzeuge wie ein Lastkraftwagen oder Lastkraftwagen-Anhänger oder ein Personenbus oder Personenbus-Anhänger, wird mit einem Datenübertragungssystem des Anspruchs 10 gelöst.

Die Aufgabe betreffend das Verfahren wird mit einem Verfahren des Anspruchs 13 zur Datenübertragung mit jeweils einem Datensystem jeweils für ein Zug-Fahrzeug und/oder Anhänger-Fahrzeug, insbesondere für Nutzfahrzeuge wie ein Lastkraftwagen und Anhänger oder ein Personenbus und Anhänger, gelöst wobei im Rahmen eines Datenübertragungssystems das Datensystem des Zug-Fahrzeug und/oder Anhänger-Fahrzeug gemäß dem Anspruch 1 Anwendung findet.

Die Erfindung geht aus von einem Datenübertragungssystem der eingangs genannten Art. Bei diesem ist erfindungsgemäß vorgesehen, dass
- das BUS-System eine zweite BUS-Einrichtung in Form eines ETHERNET-BUS aufweist, und
- das Datensystem des Zug-Fahrzeugs und/oder Anhänger-Fahrzeugs jeweils weiter einen an die Steuereinrichtung und/oder die Schnittstelle gekoppelten intelligenten Schalter aufweist, der zur bedarfsmäßig abgestimmten Kopplung des Zug-Fahrzeugs und des Anhänger-Fahrzeugs mittels dem ETHERNET-BUS ausgebildet ist, die zweite BUS-Einrichtung in Form eines ETHERNET-BUS zu aktivieren.

Insbesondere ist bei einem Datenübertragungssystem mit jeweils einem Datensystem nach Anspruch 1 jeweils für ein Zug-Fahrzeug und/oder Anhänger-Fahrzeug,
- eine Datenverbindung zwischen der Schnittstelle des Zug-Fahrzeug und der der Schnittstelle des Anhänger-Fahrzeugs vorgesehen, wobei erfindungsgemäß
- die Datenverbindung zwischen den Schnittstellen des Zug-Fahrzeug und Anhänger-Fahrzeugs als eine Twisted-Pair-Kabel-Verbindung ausgebildet ist.

Das Verfahren gemäß Anspruch 13 sieht erfindungsgemäß die Schritte vor
- Anbinden der jeweils zweiten BUS-Einrichtung in Form des ETHERNET-BUS und Prüfen einer möglichen Datenübertragung über den ETHERNET-BUS,
- Umschalten des Schalters zum Übertragen von Sensordaten über den ETHERNET-BUS, wenn die Prüfung einer möglichen Datenübertragung über den ETHERNET-BUS für das Zug-Fahrzeug und/oder Anhänger-Fahrzeug positiv ist,
- Übertragen von Sensordaten aus der jeweils zweiten BUS-Einrichtung zwischen den Schnittstellen des Zug-Fahrzeug und Anhänger-Fahrzeugs über die Twisted-Pair-Kabel-Verbindung.

Unter einer Positivprüfung wird zunächst verstanden, dass die Datenübertragung mit dem betreffenden BUS-System möglich ist, das heißt eine entsprechende Aktivierung des BUS-Systems möglich ist. Unabhängig davon kann die Prüfung erfolgen, ob eine Datenübertragung über die entsprechenden BUS-Einrichtung rechtzeitig oder mit der entsprechend gewünschten Datenrate möglich ist; dies umfasst also die Prüfung einer zeitlichen Verfügbarkeit.

Die Erfindung geht von der Überlegung aus, dass es mittlerweile in dem Gebiet der Datenübertragung BUS-Systeme gibt, die deutlich höhere Übertragungsraten als auch Datenmengen zu übertragen in der Lage sind. Diese eigenen sich insofern nicht nur zur Übertragung komplexer technischer Sensordaten einer Mehrzahl von das Fahrzeug betreffenden Fahrzeuggeräten, sondern sind darüber hinaus vor allem in der Lage sind, Datenmengen und Datenraten multimedialer Sensordaten einer Mehrzahl von die Fahrzeugumgebung sensierenden Aufnahmegeräten zu berücksichtigen.

Dies betrifft nicht nur multimediale Sensordaten von Kameras, Mikrofonen, und Sprachaufnahmen sondern auch Daten von LIDAR, RADAR und auch GPS-Daten sowie komplexe Streaming-basierte multimediale Datenanwendungen.

Ein solches Hochgeschwindigkeits- automotivfähiges Daten-BUS-System ist das (automotive) ETHERNET-BUS-System, das von der Erfindung als zweite BUS-Einrichtung für das Datensystem jeweils des Zug-Fahrzeugs und/oder Anhänger-Fahrzeugs vorgeschlagen wird.

Darüber hinaus und ausgehend von dieser Überlegung hat die Erfindung jedoch erkannt, dass es eines intelligenten Schalters bedarf, welcher an die Steuereinrichtung und/oder die Schnittstelle des entsprechenden Datensystems des Zug-Fahrzeugs und/oder Anhänger-Fahrzeugs gekoppelt ist. Dieser Schalter soll die Sicherheit der Datenverbindung wie auch die Verlässlichkeit der Datenverbindung hinsichtlich Datenübertragungsrate und Datenmenge berücksichtigen. Die Erfindung hat erkannt, dass ein solcher Schalter dazu erfindungsgemäß, zur bedarfsmäßig abgestimmten Kopplung des Zug-Fahrzeugs und des Anhänger-Fahrzeugs mittels dem ETHERNET-BUS ausgebildet ist, die zweite BUS-Einrichtung in Form eines ETHERNET-BUS zu aktivieren.

Im Rahmen einer besonders bevorzugten weiterbildenden Überlegung hat die Erfindung erkannt, dass der Schalter insofern intelligent ist, als dieser die auf CAN-BUS-Systemen akzeptierten Standards der ISO 11992 (umfassend jedenfalls die Standardteile 2, 3 und 4) in der Lage ist, zu implementieren und, auf das Hochgeschwindigkeitsprotokoll des ETHERNET-BUS zu transformieren.

Das heißt, die Übertragungsraten, Taktraten und Datenmengen basierende Paketerfordernisse des ISO11992 Standards werden auch berücksichtigt bei bedarfsmäßig abgestimmter Kopplung des Zug-Fahrzeugs und des Anhänger-Fahrzeugs mittels dem ETHERNET-BUS, wobei die zweite BUS-Einrichtung in Form eines ETHERNET-BUS aktiviert ist. Insbesondere ist Übertragungsrate Taktrate und Datenmenge basierende Paketerfordernisse des ISO11992 Standards im Rahmen des Datenübertragungssystem realisiert für eine Datenverbindung zwischen der Schnittstelle des Zug-Fahrzeug und der der Schnittstelle des Anhänger-Fahrzeugs, wobei die Datenverbindung zwischen den Schnittstellen des Zug-Fahrzeug und Anhänger-Fahrzeugs als eine Twisted-Pair-Kabel-Verbindung ausgebildet ist.

Diese Überlegung garantiert, dass beide gekoppelten Teilnehmer des Datenübertragungssystems, nämlich das Datensystem des Zug-Fahrzeugs und/oder das Datensystem des Anhänger-Fahrzeugs, in der Lage sind zwar über die Hochgeschwindigkeitskopplung datentechnisch zu kommunizieren, jedoch gleichwohl konform des Standards ISO 11992 (wenigstens den Standardteil 1). Die Gesamtlösung eines BUS-Systems mit einer ersten BUS-Einrichtung in Form eines CAN-BUS und einer zweiten BUS-Einrichtung in Form eines ETHERNET-BUS sowie des genannten intelligenten Schalters ist einerseits in der Lage, etablierte CAN-BUS-basierte Systeme zu ergänzen und diese gleichzeitig als Rückfallposition zu nutzen, bzw. auszubauen für eine schnellere und umfassendere datentechnische Kommunikation. Dies alles ermöglicht das Datenübertragungssystem unter Erhalt des Standards der ISO 11992 für datentechnische Kommunikation zwischen dem oben genannten ersten und zweiten Datensystem jeweils für ein Zug-Fahrzeug und/oder Anhänger-Fahrzeug.

Weitere Weiterbildungen der Erfindung sind den Unteransprüchen zu entnehmen, und geben im Einzelnen vorteilhafte Möglichkeiten an, das oben erläuterte Konzept, im Rahmen der Aufgabenstellung sowie hinsichtlich weiterer Vorteile, zu realisieren.

Bevorzugt ist im Rahmen eines ersten und/oder zweiten Datensystems eines Zug-Fahrzeug und/oder Anhänger-Fahrzeug, insbesondere für Nutzfahrzeuge wie ein Lastkraftwagen oder Lastkraftwagen-Anhänger oder ein Personenbus oder Personenbus-Anhänger vorgesehen,
- die erste BUS-Einrichtung in Form des CAN-BUS zu aktivieren zur Anbindung jeweils der ersten BUS-Einrichtung in Form des CAN-BUS des Datensystems des Zug-Fahrzeugs und/oder Anhänger-Fahrzeugs aneinander, wobei der Schalter, und
   der Schalter ausgebildet ist, wahlweise
- die zweite BUS-Einrichtung in Form des ETHERNET-BUS zu aktivieren zur Anbindung jeweils der zweiten BUS-Einrichtung in Form des ETHERNET-BUS des Datensystems des Zug-Fahrzeugs und/oder Anhänger-Fahrzeugs aneinander.

Bevorzugt ist im Rahmen eines ersten und/oder zweiten Datensystems vorgesehen, dass
die Schnittstelle ausgebildet ist wahlweise
- zur Kopplung der ersten BUS-Einrichtung des Zug-Fahrzeugs und des Anhänger-Fahrzeugs mittels dem CAN-BUS, oder
- zur Kopplung des Zug-Fahrzeugs und des Anhänger-Fahrzeugs mittels dem ETHERNET-BUS.

Bevorzugt ist im Rahmen eines ersten und/oder zweiten Datensystems vorgesehen, dass das BUS-System aufweist:
- einen Fahrzeug-BUS, insbesondere einen Zug-Fahrzeug-BUS des Zug-Fahrzeugs und/oder einen Erweiterungs-BUS des Anhänger-Fahrzeugs,
- einen ISO-CAN-BUS, insbesondere einen Zug-Fahrzeug-ISO-CAN-BUS des Zug-Fahrzeugs und/oder einen Erweiterungs-ISO-CAN-BUS des Anhänger-Fahrzeugs,
- einen automotiven ETHERNET-BUS, insbesondere einen automotiven Zug-Fahrzeug- ETHERNET-BUS des Zug-Fahrzeugs und/oder einen Erweiterungs-ETHERNET-BUS des Anhänger-Fahrzeugs. Hierzu sei angemerkt, dass der Zug-Fahrzeug-ISO-CAN-BUS im eigentlichen Sinn als eine Zug-Fahrzeug Seite des ISO-CAN-BUS zu verstehen ist, da der ISO-CAN-BUS eine reine Punkt zu Punkt Verbindung ist. Gleiches gilt auch bei der Anhängerseite für den Anhänger-Fahrzeug-ISO-CAN-BUS, der im eigentlichen Sinn als eine Anhänger-Fahrzeug Seite des ISO-CAN-BUS zu verstehen ist, da der ISO-CAN-BUS eine reine Punkt zu Punkt Verbindung ist.

Der ETHERNET-BUS ist ebenfalls als eine Punkt zu Punkt Verbindung in analoger Weise zu verstehen.

Bevorzugt ist im Rahmen eines ersten und/oder zweiten Datensystems vorgesehen, dass das BUS-System aufweist:
zusätzlich zu dem ISO-CAN-BUS einen nicht-ISO-CAN-BUS aufweist, insbesondere einen Zug-Fahrzeug-nicht-ISO-CAN-BUS des Zug-Fahrzeugs und/oder einen Erweiterungs-nicht-ISO-CAN-BUS des Anhänger-Fahrzeugs, und/oder
- zusätzlich zu dem automotiven ETHERNET-BUS eine PoDL-Kommunikationsverbindung, insbesondere eine automotive Zug-Fahrzeug-PoDL- Kommunikationsverbindung des Zug-Fahrzeugs und/oder eine Erweiterungs- PoDL- Kommunikationsverbindung des Anhänger-Fahrzeugs.

Bevorzugt ist im Rahmen eines ersten und/oder zweiten Datensystems vorgesehen, dass die Sensordaten umfassen:
- multimediale Sensordaten einer Mehrzahl von die Fahrzeug-Umgebung sensierenden Aufnahmegeräten, und/oder
- komplexe Sensordaten einer Mehrzahl von das Fahrzeug betreffenden Fahrzeuggeräten.

Bevorzugt ist im Rahmen eines ersten und/oder zweiten Datensystems vorgesehen, dass
das BUS-System jeweils als Gesamtsystem im Fahrzeug integriert ist, insbesondere jeweils als einziges BUS-System.

Bevorzugt ist im Rahmen eines ersten und/oder zweiten Datensystems vorgesehen, dass
das BUS-System jeweils als Nachrüstsystem, insbesondere zusätzlich zu einem weiteren bereits existierenden CAN-BUS-System, im Fahrzeug angebracht ist.

Bevorzugt ist im Rahmen eines ersten und/oder zweiten Datensystems vorgesehen, dass
der Schalter als Schnittstellen-Schalter die Schnittstelle ausbildet, insbesondere als Parallel-Schalter oder als Seriell-Schalter.

Es ist im Rahmen eines ersten und/oder zweiten Datensystems vorgesehen, dass
der Schalter --unabhängig von der Schnittstelle oder als Schnittstellen-Schalter die Schnittstelle ausbildend-- an eine intelligente Entscheidungslogik und/oder eine Steuereinrichtung des Zug-Fahrzeugs und/oder Anhänger-Fahrzeugs angebunden ist.

Bevorzugt ist im Rahmen des Datenübertragungssystem mit jeweils einem ersten und/oder zweiten Datensystem nach einem der Ansprüche 1 bis 9 jeweils für ein Zug-Fahrzeug und/oder Anhänger-Fahrzeug, insbesondere für Nutzfahrzeuge wie ein Lastkraftwagen und Anhänger oder ein Personenbus und Anhänger, vorgesehen, dass
- die Sensordaten an das jeweils andere BUS-System des Datensystems des Zug-Fahrzeugs und/oder Anhänger-Fahrzeugs im Rahmen des Datenübertragungssystems,
- über die zweite BUS-Einrichtung in Form des ETHERNET-BUS übertragbar sind, soweit das Zug-Fahrzeug und Anhänger-Fahrzeug beide über einen ETHERNET-BUS verfügen, und/oder
- über die erste BUS-Einrichtung in Form des CAN-BUS übertragbar sind, soweit das Zug-Fahrzeug und/oder das Anhänger-Fahrzeug einen ETHERNET-BUS verfügen, der sich als unzureichend erweist.

Im letzten Fall der Übertragung über die erste BUS-Einrichtung in Form des CAN-BUS soweit das Zug-Fahrzeug und/oder das Anhänger-Fahrzeug einen ETHERNET-BUS verfügen, der sich als unzureichend erweist kann eine prioritätsgesteuerte Reduzierung des Datenvolumens in Kauf genommen werden.

Bevorzugt ist im Rahmen des Datenübertragungssystem mit jeweils einem ersten und/oder zweiten Datensystem nach einem der Ansprüche 1 bis 9 vorgesehen, dass
eine Übertragungs-Messeinheit ausgebildet ist,
- die Datenverbindung zwischen den Schnittstellen des Zug-Fahrzeug und/oder Anhänger-Fahrzeugs zu prüfen, und
- ein Prüfergebnis an eine Entscheidungslogik und/oder einer Steuereinrichtung zur Betätigung des Schalters zu übermitteln.

Für das Verfahren ist optional das Übertragen von Sensordaten aus der jeweils ersten BUS-Einrichtung zwischen den Schnittstellen des Zug-Fahrzeug und Anhänger-Fahrzeugs über die Twisted-Pair-Kabel-Verbindung vorgesehen.

Regelmäßig erfolgt die erste BUS-Einrichtung in Form eines CAN-BUS als eine Twisted-pair-Kabel-Verbindung --als Doppelleitung eines Kabels mit wenigstens zwei verdrillten Adernpaaren-- ist also insbesondere als sogenannte unshielded Twisted Pair-Datenleitung (nach UTP Standard) oder shielded Twisted Pair-Datenleitung (nach STP Standard) ausgebildet; nach Standard ISO 11992 oder nach Standard ISO 11898.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einem Ausführungsbeispiel vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen bevorzugten Ausführungsbeispiele oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 schematisch ein Zug-Fahrzeug und Anhänger-Fahrzeug mit einer bevorzugten Ausführungsform eines Datenübertragungssystem für das Zug-Fahrzeug und Anhänger-Fahrzeug;
Fig. 2 eine erste Abwandlung der bevorzugten Ausführungsform eines bereits im Zug-Fahrzeug und/oder Anhänger-Fahrzeug integrierten Datenübertragungssystems;
Fig. 3 eine zweite Abwandlung der bevorzugten Ausführungsform eines im Zug-Fahrzeug und/oder Anhänger-Fahrzeug nachgerüsteten Datenübertragungssystems;
Fig. 4 eine bevorzugte erste Ausführung eines intelligenten Schalters als Schnittstellen-Schalter, der die Schnittstelle als Parallel-Schalter ausbildet;
Fig. 5 eine bevorzugte zweite Ausführung eines intelligenten Schalters als Schnittstellen-Schalter, der die die Schnittstelle als Seriell-Schalter ausbildet;
Fig. 6 schematisch ein Ablaufdiagram einer bevorzugten Ausführungsform eines Verfahrens zur Datenübertragung für ein Zug-Fahrzeug und Anhänger-Fahrzeug.

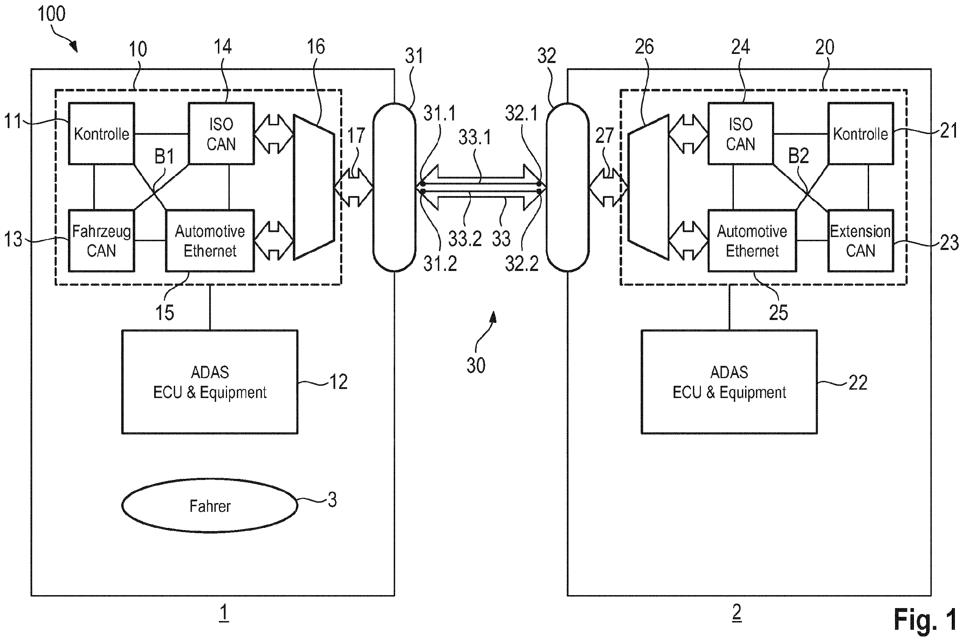

Fig. 1 zeigt in schematischer Darstellung eine bevorzugte Ausführungsform eines Datenübertragungssystems für ein Zug-Fahrzeug 1 und ein Anhänger-Fahrzeug 2. Das Datenübertragungssystem 100 umfasst gemäß dem Konzept der Erfindung jeweils ein Datensystem 10 für das Zug-Fahrzeug und ein Datensystem 20 für das Anhänger-Fahrzeug auf welche im Folgenden der Einfachheit halber als Datensystem 10, 20 Bezug genommen wird im Rahmen des Datenübertragungssystems 100, wenn auch mit unterschiedlichen Bezugszeichen versehen.

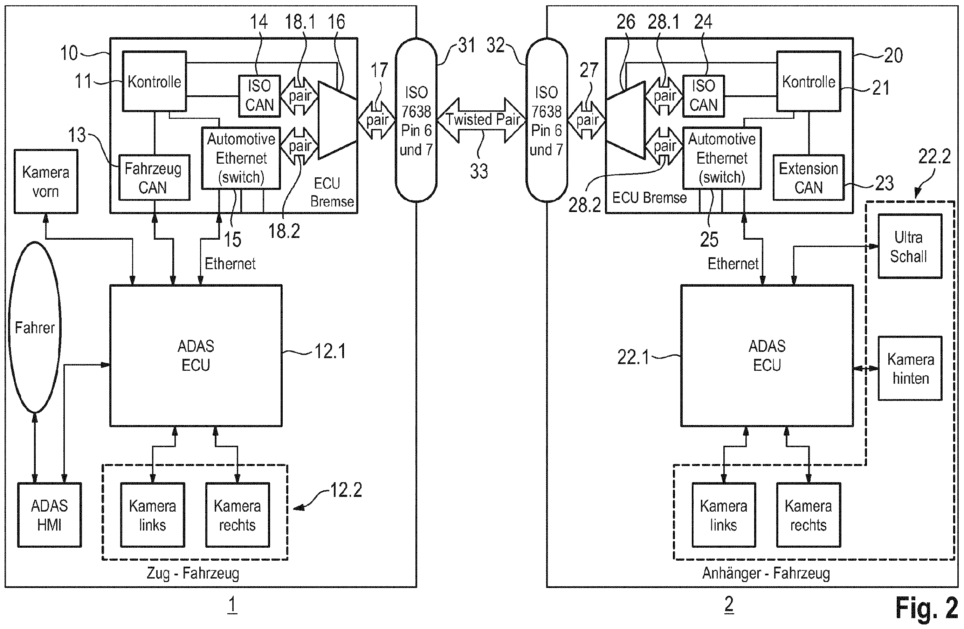

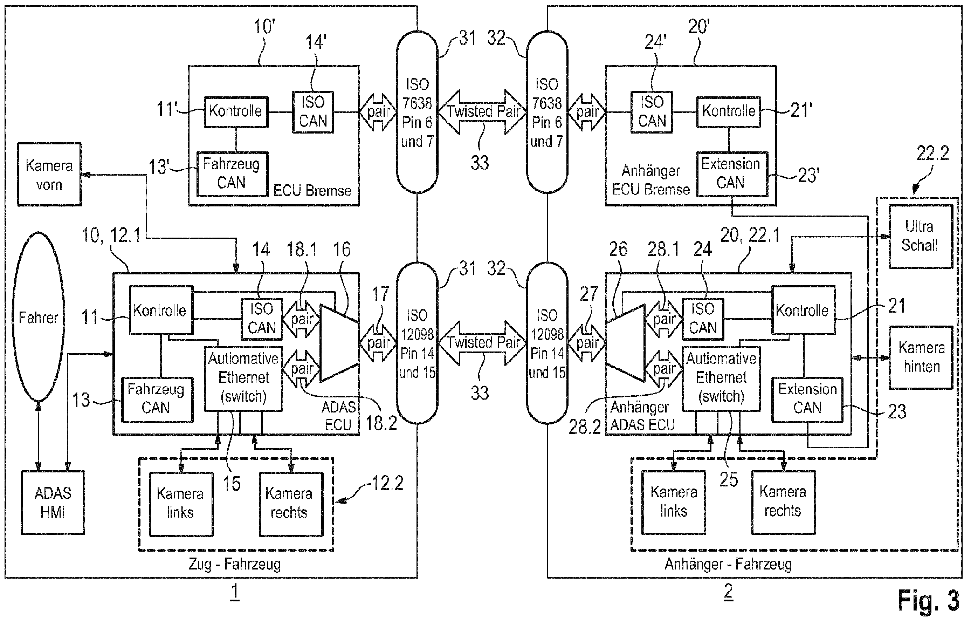

Jedes Datensystem 10, 20 weist eine Steuereinrichtung 11, 21, ein Sensorsystem 12, 22, das hier als Fahrerassistenzsystem ADAS --mit zugeordneter ECU und entsprechenden Feldgeräten (Equipment)-- symbolisiert ist und in den folgenden Ausführungsformen der Fig. 2 und Fig. 3 beispielhaft näher dargestellt ist. Der Fahrer 3 sitzt regelmäßig im Zug-Fahrzeug 1, was hier jedoch nur eine beispielhafte Anwendungsdarstellung ist.

Jedenfalls sind die wesentlichen Daten und die bildlichen Darstellungen derselben in der Fahrzeugkonsole für den Fahrer 3 im Zug-Fahrzeug 1 vorgesehen, sodass eine Datenübertragung der Sensordaten -hier mit Pfeilverbindungen dargestellt-- aus dem Sensorsystem 12 des Zug-Fahrzeugs 1 des Anhänger-fahrzeugs in der Fahrerkonsole des Zug-Fahrzeugs 1 zur Verfügung stehen müssen, um eine Fahrerunterstützung per ADAS umsetzen zu können.

Es ist also ein erstes eingangs genanntes Datensystem 10 vorgesehen, das aufweist:
- eine erste Steuereinrichtung 11,
- ein erstes Sensorsystem 12 zur Aufnahme und Verarbeitung von Sensordaten,
- ein erstes BUS-System B1 zur Übermittlung der Sensordaten zwischen der Steuereinrichtung 11 und dem Sensorsystem 12,
- eine erste Schnittstelle 31 des BUS-Systems zur Übermittlung der Sensordaten an eine zweite Schnittstelle 32 eines zweiten BUS-System 23, 24, 25 eines jeweils anderen zweiten Datensystems 20 des Anhänger-Fahrzeugs 2 im Rahmen eines Datenübertragungssystems 100, wobei
- das erste BUS-System eine erste BUS-Einrichtung 13, 14 in Form eines CAN-BUS aufweist.

Ebenso ist ein zweites eingangs genanntes Datensystem 20 vorgesehen, das aufweist:
- eine zweite Steuereinrichtung 21,
- ein zweites Sensorsystem 22 zur Aufnahme und Verarbeitung von Sensordaten,
- ein zweites BUS-System B2 zur Übermittlung der Sensordaten zwischen der Steuereinrichtung 21 und dem Sensorsystem 22,
- eine zweite Schnittstelle 32 des BUS-Systems zur Übermittlung der Sensordaten an die oben genannte erste Schnittstelle 31 des ersten BUS-System eines jeweils anderen ersten Datensystems 10 des Zug-Fahrzeugs 1 im Rahmen eines Datenübertragungssystems 100, wobei
- das zweite BUS-System eine weitere erste BUS-Einrichtung 23, 24 in Form eines CAN-BUS aufweist.

Das BUS-System des Zug-Fahrzeugs V-CAN 13 bzw. des Anhänger-Fahrzeugs EXT-CAN 23 ist also regelmäßig als CAN-BUS ausgebildet und auch die Zug-Fahrzeug- und Anhänger-Fahrzeug-basierten BUS-Systeme sind hier als ISO-CAN-BUS 14, 24 ausgeführt. Diese Ausführung entspricht den ersten BUS-Einrichtungen in Form eines CAN-BUS gemäß dem Konzept der Erfindung.

Der ISO 11992 CAN-BUS aber überträgt Daten, die für die Sicherheit des Gesamtfahrzeugs, also des Zug-Fahrzeugs und des Anhänger-Fahrzeugs wichtig sind. Der V-CAN-BUS und der EXT-CAN-BUS 13, 23 sind normale 5V CAN Busse nach ISO11898. Dahingegen ist ein ISO11992 ISO-CAN-BUS 14, 24 ein 12V / 24V-"Bus", der ein anderes physikalisches Interface hat und nur eine Punkt zu Punkt Verbindung haben kann. Wegen der Eindrahtfähigkeit ist dieser besonders Ausfallsicher und deshalb für Sicherheitsanwendungen besonders geeignet und dient jedenfalls als eine sichere Rückfallebene.

Die Datenverbindung der BUS-Einrichtungen als ISO-CAN-BUS 14, 24 gilt mit ihrer Eindrahtfähigkeit als ein besonderes Merkmal, da im Rahmen einer solchen Punkt-zu-Punkt-Verbindung zwischen dem BUS des ersten Datensystems 10 und dem BUS des zweiten Datensystem 20 des Zug-Fahrzeugs 1 bzw. Anhänger-Fahrzeugs 2 die Kommunikation bei einem ISO 11992 CAN-BUS auch aufrechterhalten werden kann, wenn eine der beiden Datenleitungen unterbrochen wäre.

Die Punkt-zu-Punkt-Verbindung wird im Rahmen der bevorzugten Ausführungsform über eine Schnittstellenverbindung 30 mit einer ersten Schnittstelle 31 und einer zweiten Schnittstelle 32 sowie einer physikalischen Leitungsverbindunghier die Datenleitung 33-- etabliert.

Insoweit bekannt weist das Datenübertragungssystem 100, gemäß dem Konzept der Erfindung, vorliegend für jedes der Datensysteme 10, 20 ein BUS-System - nämlich jeweils eine zweite BUS-Einrichtung in Form eines ETHERNET-BUS 15, 25 (Auto-ETHER) auf. Das jeweilige Datensystem 10, 20 des Zug-Fahrzeugs und/oder Anhänger-Fahrzeugs 1, 2 weist jeweils weiter ein an die Steuereinrichtung 11, 21 und/oder die Schnittstelle 31, 32 gekoppelten intelligenten Schalter 16, 26 auf. Jeder dieser Schalter 16, 26 ist wahlweise zur Anbindung 17, 27 über die Schnittstelle 31, 32 und die Datenleitung 33 jeweils des ersten BUS-Einrichtung 14, 24 in Form des ISO-CAN-BUS des Datensystems 10, 20 des Zug-Fahrzeugs und/oder Anhänger-Fahrzeugs 1, 2 aneinander, oder jeweils des zweiten BUS-Einrichtung 15, 25 in Form des ETHERNET-BUS (Auto-ETHER) des Datensystems 10, 20 des Zug-Fahrzeugs und/oder Anhänger-Fahrzeugs 1, 2 aneinander auf. Auf diese Weise lässt sich das Zug-Fahrzeug und Anhänger-Fahrzeug 1, 2 mittels des ETHERNET-BUS 15, 25 datentechnisch koppeln.

Konkret ist vorgesehen, dass das erste BUS-System eine zweite BUS-Einrichtung in Form eines ETHERNET-BUS 15 aufweist, und
- das Datensystem 10 des Zug-Fahrzeugs 1 weiter einen an die Steuereinrichtung 11 und/oder die Schnittstelle 31 gekoppelten intelligenten Schalter 16 aufweist, der zur bedarfsmäßig abgestimmten Kopplung des Zug-Fahrzeugs 1 und des Anhänger-Fahrzeugs 2 mittels dem ETHERNET-BUS 15 ausgebildet ist, die zweite BUS-Einrichtung in Form eines ETHERNET-BUS 15 zu aktivieren.

Ebenso konkret ist vorgesehen, dass das zweite BUS-System eine weitere zweite BUS-Einrichtung in Form eines ETHERNET-BUS 25 aufweist, und
- das Datensystem 20 des Anhänger-Fahrzeugs 2 weiter einen an die Steuereinrichtung 21 und/oder die Schnittstelle 32 gekoppelten intelligenten Schalter 26 aufweist, der zur bedarfsmäßig abgestimmten Kopplung des Zug-Fahrzeugs 1 und des Anhänger-Fahrzeugs 2 mittels dem ETHERNET-BUS 25 ausgebildet ist, die zweite BUS-Einrichtung in Form eines ETHERNET-BUS 25 zu aktivieren.

Nun verfügt eine automotive ETHERNET-Verbindung (Auto-ETHER) 15, 25, wie sie hier als ETHERNET-BUS 15, 25 dargestellt ist, nicht über die oben erläuterte Eigenschaft der Eindrahtfähigkeit eines ISO-CAN-BUS (der normale CAN-BUS wird als ein z. B. 5V V-CAN Bus nach ISO 11898 ausgeführt); hier wird die Anbindung 17, 27 über die Schnittstellen 31, 32 und die Datenleitung 33 realisiert. Diese ist hier als Doppelleitung eines Kabels mit wenigstens zwei verdrillten Adernpaaren 33.1, 33.2 realisiert, insbesondere als sogenannte Unshielded Twisted Pair-Datenleitung (UTP - d. h. ohne Schirm) - möglich jedoch auch als Shielded Twisted Pair-Datenleitung (STP - d. h. mit Schirm).

Gemäß dem Konzept der Erfindung ist nun vorgesehen, dass eine Umschaltung der Schnittstellentreiber von ISO 11992 CAN an den Schnittstellen 31,32 mit dem intelligenten Schalter 16, 26 auf Auto-ETHERNET über die gleiche physikalische Leitungsverbindung bzw. -anbindung 31, 32, 17, 27 erfolgt - das heißt, es werden die gleichen Steckerpins 31.1, 31.2 bzw. 32.1, 32.2 an den Schnittstellen 31 bzw. 32 belegt. Dies wird über die intelligenten Schalter 16, 26 realisiert, sobald beide Teilnehmer --das heißt die Datensysteme 10, 20 des Zug-Fahrzeugs 1 und des Anhänger-Fahrzeugs 2-- zueinander verifiziert haben, dass sie über eine gleiche schnelle Datenverbindung --nämlich hier eine Auto-ETHER-BUS-Verbindung 15, 25-- verfügen. Die Dateninhalte verschiedener ISO 11992 Teile sollen in die Kommunikation über Auto-ETHERNET eingebettet werden und mit ISO 11992 definierten Zykluszeiten übertragen werden.

Details unterschiedlicher Ausführungsformen eines solchen Datenübertragungssystems sind im Rahmen einer ersten Ausführungsform in Fig. 2 dargestellt und im Rahmen einer zweiten Ausführungsform in Fig. 3 dargestellt.

Fig. 2 zeigt etwas detaillierte im Prinzip eine erste Abwandlung der bevorzugten Ausführungsform der Fig. 1, weshalb für gleiche Merkmale oder Merkmale gleicher Funktion der Einfachheit halber gleiche Bezugszeichen verwendet sind.

Zum einen zeigt Fig. 2 etwas komplexer das ADAS-System 12, 22 mit ECU 12.1, 22.1 und Equipment 12.2, 22.2 (beispielsweise in Form von Kamera oder Ultraschallsensorik). Jeweils das ADAS-System 12, 22 und hier insbesondere die ADAS-ECU 12.1, 22.1 ist über einen ETHERNET-BUS 15, 25 an einer automotiven ETHERNET-BUS-Einheit 15, 25 jeweils des Datensystems 10, 20 angebunden -das Datensystem des ETHERNET-BUS 15, 25 ist hier im Rahmen eines Datensystems 10, 20 innerhalb einer Brems-ECU etabliert. Die Kopplung, sowohl des ISO-CAN 14, 24 als auch des automotiven ETHERNET-BUS 15, 25 an den Schalter 16, 26 ist hier jeweils mit einem Pairing-Pfeil 18.1, 18.2 bzw. 28.1, 28.2 dargestellt. Entsprechend sind die Darstellungen 28.1 und 28.2 für den Anhänger zu verstehen.

Darüber hinaus sind die Datenverbindungen zwischen Steuereinrichtung 11, 21 jeweils zum ISO-CAN 14, 24, bzw. zum Schalter 16, 26 dargestellt. An die Steuereinheit 21, 14 ist auch die automotive ETHERNET-BUS 15, 25, bzw. der Fahrzeug-CAN-BUS oder der Extension-CAN-BUS 13, 23 angebunden.

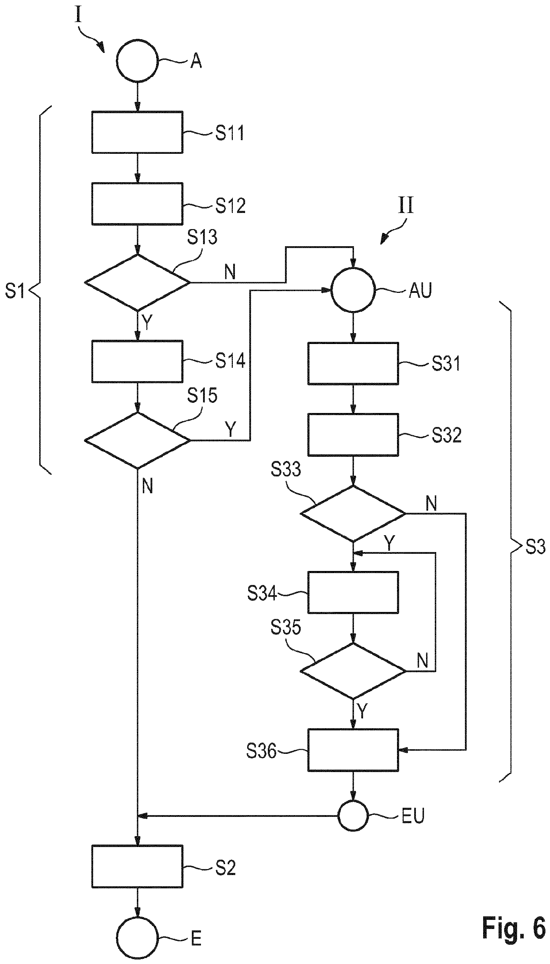

Erfolgt also eine Anfrage der ADAS-ECU 12.1, 22.1 an das Datensystem 10, 20, wird eine schnelle Datenverbindung --im Rahmen der Sequenz II des in Fig.6 dargestellten Verfahrens-- ausgehandelt und umgesetzt und über die Twisted-Pair-Verbindung und die Schnittstellen 31, 32, 33 umgesetzt. Die Datenleitung 33 -- als Doppelleitung eines Kabels mit wenigstens zwei verdrillten Adernpaaren 33.1, 33.2-- ist also insbesondere als sogenannte unshielded Twisted Pair-Datenleitung (UTP) ausgebildet.

Wie gemäß Fig. 3 dargestellt kann dieses System praktisch identisch auch im Rahmen einer Nachrüstlösung realisiert werden neben bereits einer existierenden Datenkommunikation zwischen 10' und 20' über einen CAN-BUS - letzterer ist in Fig. 3 oben dargestellt; erstere Nachrüstlösung (praktisch identisch zur der Darstellung in Fig. 2) in Fig. 3 unten zwischen 10 und 20, wiederum mit den gleichen Bezugszeichen.

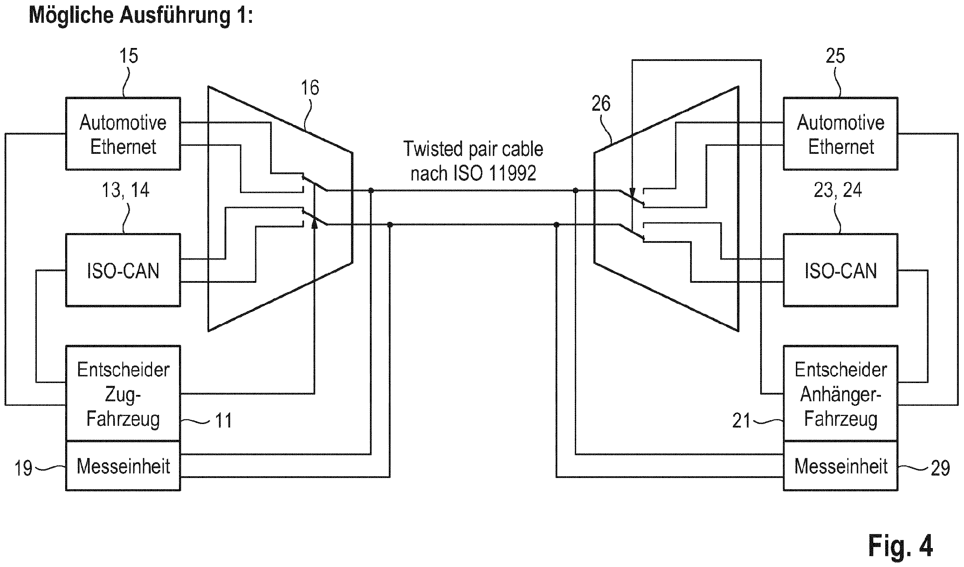

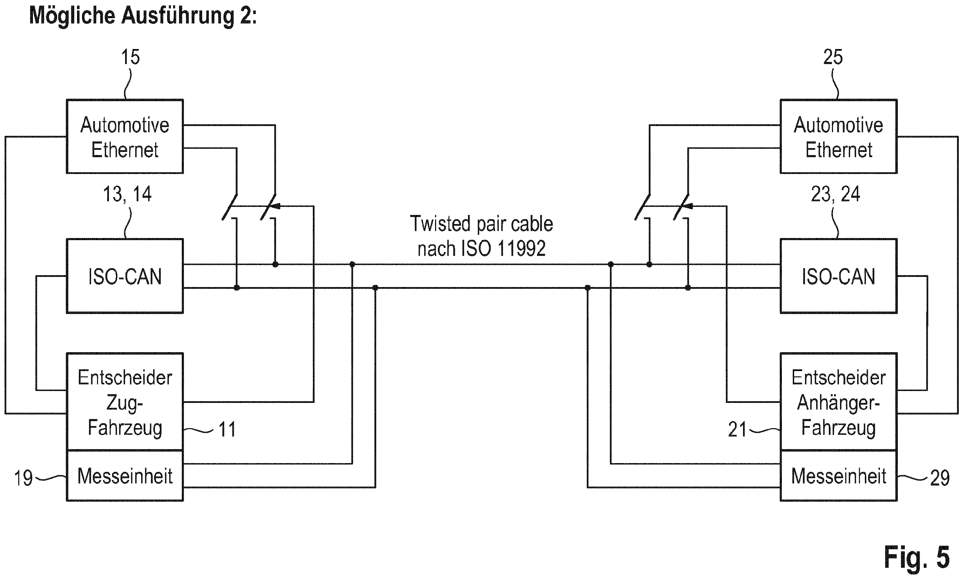

Unterschiedliche intelligente Schaltereinrichtungen sind im Rahmen einer ersten Ausführungsform eines intelligenten Schalters in Fig. 4 und im Rahmen einer zweiten Ausführungsform eines intelligenten Schalters in Fig. 5 dargestellt.

In Fig. 4 ist eine erste Schaltereinrichtung mit einem ersten intelligenten Schalter 16, 26 und eine Twisted-Pair-Kabel-Verbindung entsprechend ISO 11992 im Detail dargestellt. Dazu für eine ISO 7638 Verbindung der Schnittstellen 16, 26. Auch die in Fig. 2 dargestellten Datenverbindungen zwischen ISO-CAN 14, 24 und automotivem ETHERNET 15, 25 sind im Detail dargestellt, wobei auch die Verbindungen zwischen Schalter 16, 26 und entsprechender Steuereinrichtung 11, 21 dargestellt sind.

Zusätzlich ist eine Messeinheit 19, 29 dargestellt, welche die in den Schritten S13 und S15, S33 und S35 etablierten Abfragen unterstützt - hier können beispielsweise Spannungspegel auf Datenleitungen gemessen werden und an die entsprechende Steuereinrichtung 11, 21 weitergegeben werden, sodass diese beim Setzen der Schaltverbindungen der Schaltereinrichtungen 16, 26 berücksichtigt werden.

Ganz ähnlich ist eine zweite Schaltereinrichtung der Fig. 5 aufgebaut, wobei hier jedoch der ISO-CAN-BUS 14, 24 im passiven Zustand gehalten wird, während über den ETHERNET-BUS eine Datenkopplung per Datenleitung 33 erfolgen kann. Ist der ISO-CAN-BUS 14, 24 aktiv, wird regelmäßig der ETHERNET-BUS 15, 25 getrennt, um die Übertragungsqualität des ISO-CAN-BUS 14, 24 zu erhalten. Es kann jedoch eine Parallelkommunikation sowohl über CAN-BUS als auch über ETHERNET-BUS per Datenleitung 33 erfolgen.

Fig. 6 zeigt im Rahmen eines bevorzugten Ausführungsbeispiels eines Verfahrens zwei miteinander verknüpfte Abläufe --die beiden Stränge sind vorliegend mit I und II bezeichnet-- auf der Plattform des in Fig. 1 gezeigten bevorzugten Datenübertragungssystems 100. Dieses sieht in einem ersten Strang I des ersten Ablaufs den Aufbau einer Datenverbindung per ISO-CAN 14, 24 vor --das heißt mittels des ISO-CAN-BUS 14, 24 über die Schalter 16, 26, die Schnittstellen 31, 32 und die Datenleitung 33 als Twisted-Pair-Kabel-Verbindung zwischen A und E--, wobei bei anfallenden höheren Datenmengen von 100 Mbit/s oder mehr, eine zweite BUS-Verbindung per ETHERNET-BUS zur Verfügung steht, die mit einem Anfang eines Umschaltvorganges AU und einem Ende eines Umschaltvorganges EU eingeleitet und beendet wird.

Es ist zu verstehen, dass selbst wenn das vorliegende Verfahren im Rahmen eines ADAS-basierten Systems erläutert ist, dieses jedoch gleichwohl anwendbar ist, auch für andere Sensorsysteme mit höheren Datenanforderungen, wie beispielsweise Voice-over-IP-Sprachkommunikationssysteme zwischen Zug-Fahrzeug und Anhänger-Fahrzeug, beispielsweise einem BUS-Einrichtung und einem BUS-Anhänger.

Die Umschaltung per intelligentem Schalter 16, 26 ist selbstverständlich nicht beschränkt auf die Umschaltung zwischen einem CAN-BUS und einem ETHERNET-BUS, sondern kann auch weitere Optionen zur Schaltung beispielsweise von nicht ISO 11992 spezifischen CAN-Verbindungen beinhalten, innerhalb und außerhalb eines Fahrzeugs oder Anhängers.

Dies können zum Beispiel Anwendungen im Rahmen des Fleet-Managementsystems (FMS) mit einer FMS-Schnittstelle sein. Auch können andere Übertragungsverfahren als die in der ETHERNET-Norm 802.3bp und 802.3bw erläutert vorgesehen sein. Beispielsweise können auch Leistungsübertragungen PoDL, wie in 802.3bu spezifiziert, vorgesehen sein als zusätzliche Schaltinformation. Darüber hinaus können Schaltzustände für Übertragungsraten vorgesehen sein, die über bisher definierte Standards hinausgehen.

Zurückkommend auf das Verfahren der Fig.6, werden am Anfang im Rahmen einer Start-up-Sequenz in einem ersten Schritt S1 die Möglichkeiten einer ISO 11992 Kommunikation per CAN-BUS (ISO-CAN-BUS) 14, 24 geprüft, bzw. die Möglichkeiten einer Kommunikation über einen schnellen ETHERNET-BUS geprüft.

Es wird in einem ersten Schritt S11 geprüft, ob die Möglichkeit einer Datenübertragung per ISO-CAN-BUS 14, 24 besteht (Start-Up - Prüfe ISO-CAN). Dazu können die normalerweise nach ISO 11992 spannungführenden Leitungen die auf die Versorgungsspannung des Fahrzeugs bezogen sind, auf ihren Spannungspegel geprüft werden, im Rahmen eines Schrittes S12 (Messe ISO-CAN Spannungs-Pegel). Die Abfrage, ob ein ISO-CAN-BUS innerhalb einer vorbestimmten Zeitspanne zur Verfügung steht, erfolgt in einem Schritt S13 (Ist ein ISO-CAN rechtzeitig verfügbar?). Wird ein solcher Pegel gemessen wird dies positiv beantwortet. In einem JA-Zweig Y können dann die Diagnosedaten über den ISO-CAN-BUS 14, 24, die Schalter 16, 26, die Schnittstellen 31, 32 und die Datenleitung 33 --beispielsweise vom Anhänger-Fahrzeug zum Zug-Fahrzeugausgelesen werden in einem Schritt S14 (Lese Diagnosedaten vom Anhänger). Bei nicht anfallenden Datenraten mit erhöhtem Pegel, kann das System so verbleiben.

Spätestens jedoch beim Anfallen höherer Datenraten oder bei der Erforderlichkeit von ADAS-aktivem Datenaustausch, kann in einem Schritt S15 die Anfrage an das Anhänger-Fahrzeug erfolgen, ob ein automotiver ETHERNET-BUS 15, 25 zur Verfügung steht (Ist der Anhänger fähig für Automotive ETHERNET?).

Wird diese Anfrage negativ beantwortet, verbleibt im Rahmen eines NEIN-Zweigs N die Kommunikation auf dem CAN-BUS 13, 23, 14, 24 in der oben erläuterten Weise, wie dies in Schritt S2 dargestellt ist (Kommuniziere auf ISO CAN so lange wie möglich - Eindrahtverbindung).

Das Verfahren zum Durchlaufen einer BUS-Abfrage zwischen Anhänger- und Zug-Fahrzeug ist damit beendet im Schritt E.

Anknüpfend an den oben genannten Schritt S13, bzw. an den Schritt S15, kann jedoch eine Umschaltung auf einen schnelleren Daten-BUS --nämlich hier den vorgestellten ETHERNET-BUS 15, 25 (konkret Hochgeschwindigkeitsautomotiver ETHERNET-BUS mit Datenraten von 100 Mbit/s oder mehr)-- erfolgen. Dazu wird im Folgenden der Strang II des Verfahrens in Fig.6 erläutert.

Zunächst ausgehend von der Abfrage im Schritt S13 kann im Rahmen eines NEIN-Zweigs N die Abfrage, ob überhaupt ein ISO-CAN-BUS 14, 24 zur Verfügung steht, auch negativ beantwortet werden. In dem Fall kann sofort ein Umschalten auf einen ETHERNET-BUS 15, 25 per Schalter 16, 26 erfolgen, wie dies im Schritt S3, bzw. S31 dargestellt ist (Schalte um auf automotive ETHERNET, Entlasse ISO CAN). Danach kann in einem Schritt S32 die Kommunikation zwischen dem automotiven ETHERNET-BUS 15, 25 durch Umschalten der Schalter 16, 26 über die Schnittstellen 31, 32 und die Datenleitung 33 (Twisted-Pair-Kabel) erfolgen (sStelle Kommunikation mit automotivem ETHERNET her). Insgesamt können also die Verfügbarkeit und Etablierung der schnellen Datenverbindung durch den Austausch von Diagnosebotschaften erfolgen und sobald beide Datensysteme 10, 20 von Anhänger und Zug-Fahrzeug in der Lage sind, miteinander über die schnelle Datenleitung, hier den ETHERNET-BUS 15, 25, zu kommunizieren, wird auf ein Kommando im Rahmen des Anfangs des Umschaltvorganges AU umgeschaltet.

Ein solcher Umschaltvorgang kann auch sofort erfolgen, wenn innerhalb einer vorbestimmten Zeit, im Rahmen der Abfrage S12, kein entsprechender für einen CAN-BUS relevanter Pegel auf den Datenleitungen gemessen werden kann. Auch dann wird im Rahmen des Schritts AU sofort per S31 und S32 auf den ETHERNET-BUS 15, 25 über den intelligenten Schalter 16, 26 umgeschaltet und die schnelle Datenverbindung über den ETHERNET-BUS im Schritt S32 etabliert.

Es gibt jedoch außerdem mehrere Fälle, in denen eine ETHERNET-BUS-Verbindung nicht mehr erforderlich ist oder nicht mehr möglich ist. Deswegen erfolgt im Rahmen einer Abfrage S33 -möglichst ständig oder jedenfalls regelmäßig durchlaufend-- eine Schleife, ob der automotive ETHERNET-BUS 15, 25 auch rechtzeitig zur Verfügung steht (Ist automotiver ETHERNET-BUS rechtzeitig verfügbar?). Das heißt, nach dem Umschalten --bei vorhandener Möglichkeit-- einer Kommunikation über den ETHERNET-BUS 15, 25, 16, 26 erfolgt anschließend die Prüfung, ob auch die Zeitvorgaben, die man von der ETHERNET-BUS-Kommunikation erwartet, erfüllt sind.

Diese Abfrage S33 kann auch die Prüfung umfassen, ob die schnelle Datenübertragung für den ETHERNET-BUS bei einer existierenden bzw. einer existierenden stabilen Verbindung zustande kommt. Sollte beispielsweise im Rahmen einer Timeout-Abfrage dies nicht bestätigt werden, ist dem NEIN-Zweig N nach Schritt S33 folgend im Schritt S36 auf den ISO 11992 CAN-BUS 14, 24 zurückzuschalten (Schalte um auf ISO CAN, Entlasse automotiven ETHERNET-BUS).

Ebenso kann sich die schnelle Datenverbindung für einen ETHERNET-BUS 15, 25 vom BUS-Einrichtung trennen, sobald ein ISO 11992 konformer Pegel auf einer Leitung detektiert wird, auch wenn dies beim Umschaltvorgang AU zunächst nicht der Fall war. Diese -möglichst ständig oder jedenfalls regelmäßig durchlaufende-- Überwachung wird im Rahmen eines JA-Zweigs Y ausgehend von der Abfrage S33 über die Schritte S34 und S35 realisiert; im Schritt S34 wird abfragt, ob ISO CAN Spannungspegel vorliegen (Automotive ETHERNET Kommunikation, kontinuierliches Überwachen auf ISO CAN Spannungs-Pegel) und im Schritt S35 wird abfragt, ob der Pegel im erwarteten Bereich liegt (Ist der Pegel im erwarteten Bereich?). Selbst wenn also im Schritt S33 eine ETHERNET-Verbindung für den ETHERNET-BUS des Auto-ETHER 15, 25 zur Verfügung steht, so ist also bei etwaiger instabiler Verbindung oder bei existierender CAN-Verbindung, insbesondere bei nicht mehr benötigter hoher Datenübertragung, im Rahmen eines NEIN-Zweigs N ausgehend von der Abfrage S33 oder aber bei Bestätigung eines CAN-BUS im Rahmen eines JA-Zweigs Y ausgehend von der Abfrage S35 auf den CAN-BUS zurückzuschalten in Schritt S36. Anschließend führt dies wieder auf die Kommunikation über den ISO-CAN-BUS 14, 24 im Schritt S2 - hier mag man eine Einschränkung in der Datenrate in Kauf nehmen. Bei verneinter Bestätigung eines CAN-BUS im Rahmen eines NEIN-Zweigs N ausgehend von der Abfrage S35 wird im Schritt S34 wiederholt abgefragt, ob ISO CAN Spannungspegel vorliegen.

Das heißt regelmäßig endet das Verfahren wieder per Kommunikation über den ISO-CAN-BUS 14, 24 und für den Fall, dass eine höherer Datenübertragungsrate nicht mehr erforderlich sein sollte.

Mit dieser Ausführung des Strangs II gekoppelt am Strang I des Verfahrens, ist also sichergestellt, dass zwar eine Auto-ETHER-Kommunikation per ETHERNET-BUS 15, 25 erfolgen kann, bei Bedarf und für den Fall, dass ein CAN-BUS gar nicht zur Verfügung steht - ersteres (dass eine Auto-ETHER-Kommunikation per ETHERNET-BUS 15, 25 bei Bedarf erfolgen kann) ausgehend vom Schritt S15 im JA-Zweig Y und letzeres (dass ein CAN-BUS gar nicht zur Verfügung steht) ausgehend vom Schritt S13 im NEIN-Zweig N.

Eine Auto-ETHER-Kommunikation per ETHERNET-BUS 15, 25 erfolgt, beginnend mit AU und dem Schritt S21.

Jedoch ist ein Rückumschalten der Schalter 16, 26 jederzeit möglich und regelmäßig der Fall, zum einem wenn der CAN-BUS bejahendenfalls zur Verfügung steht per Schritt S35 und S36, beziehungsweise zwangsweise, wenn ein ETHERNET-BUS im NEIN-Zweig des Schrittes S33 nicht die nötigen Stabilitätskriterien erfüllt, also beispielsweise im Rahmen einer Timeout-Zeit nicht zur Verfügung steht. Dies betrifft dann den NEIN-Zweig N ausgehend von Schritt S33, während im JA-Zweig Y, ausgehend vom Schritt S33 die Kommunikation bei höheren Datenübertragungsraten erfolgt, aber auch dann immer unter kontinuierlicher Überwachung der Verfügbarkeit eines ISO-CAN-BUS 14, 24 durch Prüfen von entsprechendem Spannungspegel.

### Liste der Bezugszeichen (Bestandteil der Beschreibung)

- 1: Zug-Fahrzeug
- 2: Anhänger-Fahrzeug
- 3: Fahrer
- 10, 10': Erstes Datensystem, Datensystem für das Zug-Fahrzeug
- 11: Erste Steuereinrichtung, Steuereinrichtung für das Zug-Fahrzeug
- 12: Erstes Sensorsystem, Sensorsystem für das Zug-Fahrzeug
- 12.1: ADAS-ECU für das Zug-Fahrzeug
- 12.2: Equipment für das Zug-Fahrzeug
- 13: (Erste) V-CAN-BUS-Einrichtung des ersten BUS-Systems, BUS-System des Zug-Fahrzeugs V-CAN
- 14: (Erste) ISO-CAN-BUS-Einrichtung des ersten BUS-Systems, Zug-Fahrzeug-basiertes BUS-System, ISO-CAN-BUS
- 15: (Zweite) ETHERNET-BUS-Einrichtung des ersten BUS-Systems
- 16: Erster intelligenter Schalter, Intelligenter Schalter für das Zug-Fahrzeug
- 17: Erste Anbindung, Anbindung zwischen erstem intelligenten Schalter und erster Schnittstelle
- 18.1: Erster Pairing-Pfeil des ersten intelligenten Schalters
- 18.2: Zweiter Pairing-Pfeil des ersten intelligenten Schalters
- 19: Erste Messeinheit
- 20, 20': Zweites Datensystem, Datensystem für das Anhänger-Fahrzeug
- 21: Zweite Steuereinrichtung, Steuereinrichtung für das Anhänger-Fahrzeug
- 22: Zweites Sensorsystem, Sensorsystem für das Anhänger-Fahrzeug
- 22.1: ADAS-ECU für das Anhänger-Fahrzeug
- 22.2: Equipment für das Anhänger-Fahrzeug
- 23: (Erste) EXT-CAN-BUS-Einrichtung des zweiten BUS-Systems, BUS-System des Anhänger-Fahrzeugs EXT-CAN
- 24: (Erste) ISO-CAN-BUS-Einrichtung des zweiten BUS-Systems, Anhänger-Fahrzeug-basiertes BUS-System, ISO-CAN-BUS
- 25: (Zweite) ETHERNET-BUS-Einrichtung des zweiten BUS-Systems
- 26: Zweiter intelligenter Schalter, Intelligenter Schalter für das Anhänger-Fahrzeug
- 27: Zweite Anbindung, Anbindung zwischen zweitem intelligenten Schalter und zweiter Schnittstelle
- 28.1: Erster Pairing-Pfeil des zweiten intelligenten Schalters
- 28.2: Zweiter Pairing-Pfeil des zweiten intelligenten Schalters
- 29: Zweite Messeinheit
- 30: Schnittstellenverbindung
- 31: Erste Schnittstelle
- 31.1: Erstes verdrilltes Adernpaar der ersten Schnittstelle, erster Steckerpin der ersten Schnittstelle
- 31.2: Zweites verdrilltes Adernpaar der ersten Schnittstelle, zweiter Steckerpin der ersten Schnittstelle
- 32: Zweite Schnittstelle
- 32.1: Erstes verdrilltes Adernpaar der zweiten Schnittstelle, erster Steckerpin der zweiten Schnittstelle
- 32.2: Zweites verdrilltes Adernpaar der zweiten Schnittstelle, zweiter Steckerpin der zweiten Schnittstelle
- 33: Datenleitung, physikalische Leitungsverbindung
- 100: Datenübertragungssystem
- A: Anfang des Ablaufs
- AU: Anfang eines Umschaltvorganges
- EU: Ende eines Umschaltvorganges
- B1: Erstes BUS-System, BUS-System für das Zug-Fahrzeug
- B2: Zweites BUS-System, BUS-System für das Anhänger-Fahrzeug
- E: Ende des Ablaufs
- I: Erster Strang
- II: Zweiter Strang
- J: JA-Zweig des Ablaufs
- N: NEIN-Zweig des Ablaufs
- S1-3: Erster bis dritter Schritt des Ablaufs
- S11-15: Erster bis fünfter Teilschritt des ersten Schritts
- S31-36: Erster bis sechster Teilschritt des dritten Schritts

## Patentansprüche

1. Datensystem eines Zug-Fahrzeugs (1) und/oder Anhänger-Fahrzeugs (2) insbesondere für Nutzfahrzeuge wie einen Lastkraftwagen oder Lastkraftwagen-Anhänger oder einen Personenbus oder Personenbus-Anhänger, aufweisend :
- eine Steuereinrichtung,
- ein Sensorsystem zur Aufnahme und Verarbeitung von Sensordaten,
- ein BUS-System zur Übermittlung der Sensordaten zwischen der Steuereinrichtung und dem Sensorsystem,
- eine Schnittstelle des BUS-Systems zur Übermittlung der Sensordaten an eine Schnittstelle eines BUS-System eines jeweils anderen Datensystems des Zug-Fahrzeugs (1) und/oder Anhänger-Fahrzeugs (2) im Rahmen eines Datenübertragungssystems (100), wobei
- das BUS-System eine erste BUS-Einrichtung in Form eines CAN-BUS aufweist, und
- das BUS-System eine zweite BUS-Einrichtung in Form eines ETHERNET-BUS aufweist,
**dadurch gekennzeichnet, dass**
- das Datensystem des Zug-Fahrzeugs (1) und/oder Anhänger-Fahrzeugs (2) jeweils
weiter einen an die Steuereinrichtung und/oder die Schnittstelle gekoppelten intelligenten Schalter aufweist, der zur bedarfsmäßig abgestimmten Kopplung des Zug-Fahrzeugs und des Anhänger-Fahrzeugs mittels des ETHERNET-BUS ausgebildet ist, die zweite BUS-Einrichtung in Form eines ETHERNET-BUS zu aktivieren, wobei
der Schalter --unabhängig von der Schnittstelle oder als Schnittstellen-Schalter die Schnittstelle ausbildend-- an eine intelligente Entscheidungslogik und/oder eine Steuereinrichtung des Zug-Fahrzeugs und/oder Anhänger-Fahrzeugs angebunden ist.

2. Datensystem nach Anspruch 1 **dadurch gekennzeichnet, dass** der Schalter ausgebildet ist, wahlweise
- die erste BUS-Einrichtung in Form des CAN-BUS zu aktivieren zur Anbindung jeweils der ersten BUS-Einrichtung in Form des CAN-BUS des Datensystems des Zug-Fahrzeugs und/oder Anhänger-Fahrzeugs aneinander, wobei der Schalter ausgebildet ist, wahlweise
- die zweite BUS-Einrichtung in Form des ETHERNET-BUS zu aktivieren zur Anbindung jeweils der zweiten BUS-Einrichtung in Form des ETHERNET-BUS des Datensystems des Zug-Fahrzeugs und/oder Anhänger-Fahrzeugs aneinander.

3. Datensystem nach Anspruch 1 oder 2, **dadurch gekennzeichnet, dass**
die Schnittstelle ausgebildet ist wahlweise
- zur Kopplung der ersten BUS-Einrichtung des Zug-Fahrzeugs und des Anhänger-Fahrzeugs mittels des CAN-BUS, oder
- zur Kopplung des Zug-Fahrzeugs und des Anhänger-Fahrzeugs mittels des ETHERNET-BUS.

4. Datensystem nach einem der vorhergehenden Ansprüche **dadurch gekennzeichnet, dass**
das BUS-System aufweist:
- einen Fahrzeug-BUS, insbesondere einen Zug-Fahrzeug-BUS des Zug-Fahrzeugs und/oder einen Erweiterungs-BUS des Anhänger-Fahrzeugs,
- einen ISO-CAN-BUS, insbesondere einen Zug-Fahrzeug-ISO-CAN-BUS des Zug-Fahrzeugs und/oder einen Erweiterungs-ISO-CAN-BUS des Anhänger-Fahrzeugs,
- einen automotiven ETHERNET-BUS, insbesondere einen automotiven Zug-Fahrzeug- ETHERNET-BUS des Zug-Fahrzeugs und/oder einen Erweiterungs-ETHERNET-BUS des Anhänger-Fahrzeugs.

5. Datensystem nach Anspruch 4 **dadurch gekennzeichnet, dass**
das BUS-System aufweist:
zusätzlich zu dem ISO-CAN-BUS einen nicht-ISO-CAN-BUS aufweist, insbesondere einen Zug-Fahrzeug-nicht-ISO-CAN-BUS des Zug-Fahrzeugs und/oder einen Erweiterungs-nicht-ISO-CAN-BUS des Anhänger-Fahrzeugs, und/oder
- zusätzlich zu dem automotiven ETHERNET-BUS eine PoDL-Kommunikationsverbindung, insbesondere eine automotive Zug-Fahrzeug-PoDL- Kommunikationsverbindung des Zug-Fahrzeugs und/oder eine Erweiterungs- PoDL- Kommunikationsverbindung des Anhänger-Fahrzeugs.

6. Datensystem nach einem der vorhergehenden Ansprüche **dadurch gekennzeichnet, dass**
die Sensordaten umfassen:
- multimediale Sensordaten einer Mehrzahl von die Fahrzeug-Umgebung sensierenden Aufnahmegeräten, und/oder
- komplexe Sensordaten einer Mehrzahl von das Fahrzeug betreffenden Fahrzeuggeräten.

7. Datensystem nach einem der vorhergehenden Ansprüche **dadurch gekennzeichnet, dass**
das BUS-System jeweils als Gesamtsystem im Fahrzeug integriert ist, insbesondere jeweils als einziges BUS-System.

8. Datensystem nach einem der vorhergehenden Ansprüche **dadurch gekennzeichnet, dass**
das BUS-System jeweils als Nachrüstsystem, insbesondere zusätzlich zu einem weiteren bereits existierenden CAN-BUS-System, im Fahrzeug angebracht ist.

9. Datensystem nach einem der vorhergehenden Ansprüche **dadurch gekennzeichnet, dass**
der Schalter als Schnittstellen-Schalter die Schnittstelle ausbildet, insbesondere als Parallel-Schalter oder als Seriell-Schalter.

10. Datenübertragungssystem (100) mit jeweils einem Datensystem nach einem der
Ansprüche 1 bis 9 jeweils für ein Zug-Fahrzeug und/oder Anhänger-Fahrzeug, insbesondere für Nutzfahrzeuge wie ein Lastkraftwagen und Anhänger oder ein Personenbus und Anhänger, wobei das Datensystem des Zug-Fahrzeugs und/oder Anhänger-Fahrzeugs jeweils aufweist:
- eine Steuereinrichtung,
- ein Sensorsystem zur Aufnahme und Verarbeitung von Sensordaten,
- ein BUS-System zur Übermittlung der Sensordaten zwischen der Steuereinrichtung und dem Sensorsystem,
- eine Schnittstelle des BUS-Systems zur Übermittlung der Sensordaten an eine Schnittstelle eines BUS-System des jeweils anderen Datensystems des Zug-Fahrzeugs und/oder Anhänger-Fahrzeugs im Rahmen des Datenübertragungssystems, und
das Datenübertragungssystem aufweist:
- eine Datenverbindung zwischen der Schnittstelle des Zug-Fahrzeug und der der Schnittstelle des Anhänger-Fahrzeugs, wobei
- das BUS-System jeweils die erste BUS-Einrichtung in Form eines CAN-BUS aufweist,
- das BUS-System jeweils eine zweite BUS-Einrichtung in Form eines ETHERNET-BUS aufweist, und
- das Datensystem des Zug-Fahrzeugs und/oder Anhänger-Fahrzeugs jeweils weiter einen an die Steuereinrichtung und/oder die Schnittstelle gekoppelten intelligenten Schalter aufweist, der zur bedarfsmäßig abgestimmten Kopplung des Zug-Fahrzeugs und des Anhänger-Fahrzeugs mittels des ETHERNET-BUS ausgebildet ist, die zweite BUS-Einrichtung in Form eines ETHERNET-BUS zu aktivieren, und
- die Datenverbindung zwischen den Schnittstellen des Zug-Fahrzeug und Anhänger-Fahrzeugs als eine Twisted-Pair-Kabel-Verbindung ausgebildet ist.

11. Datenübertragungssystem nach Anspruch 10, **dadurch gekennzeichnet, dass** die Schnittstelle über den Schalter derart geschaltet wird, dass
- die Sensordaten an das jeweils andere BUS-System des Datensystems des Zug-Fahrzeugs und/oder Anhänger-Fahrzeugs im Rahmen des Datenübertragungssystems,
- über die zweite BUS-Einrichtung in Form des ETHERNET-BUS übertragbar sind, soweit das Zug-Fahrzeug und Anhänger-Fahrzeug beide über einen ETHERNET-BUS verfügen, und/oder
- über die erste BUS-Einrichtung in Form des CAN-BUS übertragbar sind, soweit das Zug-Fahrzeug und/oder das Anhänger-Fahrzeug einen ETHERNET-BUS verfügen, der sich als unzureichend erweist.

12. Datenübertragungssystem nach Anspruch 10 oder 11, **dadurch gekennzeichnet, dass**
eine Übertragungs-Messeinheit ausgebildet ist,
- die Datenverbindung zwischen den Schnittstellen des Zug-Fahrzeug und/oder Anhänger-Fahrzeugs zu prüfen, und
- ein Prüfergebnis an eine Entscheidungslogik und/oder einer Steuereinrichtung zur Betätigung des Schalters zu übermitteln.

13. Verfahren zur Datenübertragung mit jeweils einem Datensystem jeweils für ein Zug-Fahrzeug (1) und/oder Anhänger-Fahrzeug (2), insbesondere für Nutzfahrzeuge wie einen Lastkraftwagen und Anhänger oder einen Personenbus und Anhänger, wobei im Rahmen eines Datenübertragungssystems das Datensystem des Zug-Fahrzeugs und/oder Anhänger-Fahrzeugs jeweils aufweist:
- eine Steuereinrichtung,
- ein Sensorsystem zur Aufnahme und Verarbeitung von Sensordaten,
- ein BUS-System zur Übermittlung der Sensordaten zwischen der Steuereinrichtung und dem Sensorsystem,
- eine Schnittstelle des BUS-Systems zur Übermittlung der Sensordaten an eine Schnittstelle eines BUS-System eines jeweils anderen Datensystems des Zug-Fahrzeugs und/oder Anhänger-Fahrzeugs im Rahmen eines Datenübertragungssystems, wobei
- das BUS-System eine erste BUS-Einrichtung in Form eines CAN-BUS aufweist,
- das BUS-System eine zweite BUS-Einrichtung in Form eines ETHERNET-BUS aufweist, und
- das Datensystem des Zug-Fahrzeugs und/oder Anhänger-Fahrzeugs jeweils weiter einen an die Steuereinrichtung und/oder die Schnittstelle gekoppelten intelligenten Schalter aufweist, der zur bedarfsmäßig abgestimmten Kopplung des Zug-Fahrzeugs und des Anhänger-Fahrzeugs mittels des ETHERNET-BUS ausgebildet ist, die zweite BUS-Einrichtung in Form eines ETHERNET-BUS zu aktivieren, wobei
der Schalter --unabhängig von der Schnittstelle oder als Schnittstellen-Schalter die Schnittstelle ausbildend-- an eine intelligente Entscheidungslogik und/oder eine Steuereinrichtung des Zug-Fahrzeugs und/oder Anhänger-Fahrzeugs angebunden ist,
und das Datenübertragungssystem (100) aufweist:
- eine Datenverbindung zwischen der Schnittstelle des Zug-Fahrzeug und der der Schnittstelle des Anhänger-Fahrzeugs, wobei
- die Datenverbindung zwischen den Schnittstellen des Zug-Fahrzeug und Anhänger-Fahrzeugs als eine Twisted-Pair-Kabel-Verbindung ausgebildet ist,
- das Verfahren die Schritte aufweist:
- Anbinden der jeweils zweiten BUS-Einrichtung in Form des ETHERNET-BUS und Prüfen einer möglichen Datenübertragung über den ETHERNET-BUS,
- Umschalten des Schalters zum Übertragen von Sensordaten über den ETHERNET-BUS, wenn die Prüfung einer möglichen Datenübertragung über den ETHERNET-BUS für das Zug-Fahrzeug und/oder Anhänger-Fahrzeug positiv ist,
- Übertragen von Sensordaten aus der jeweils zweiten BUS-Einrichtung zwischen den Schnittstellen des Zug-Fahrzeug und Anhänger-Fahrzeugs über die Twisted-Pair-Kabel-Verbindung.

14. Verfahren nach Anspruch 13, **gekennzeichnet durch** die Schritte:
- optional Übertragen von Sensordaten aus der jeweils ersten BUS-Einrichtung zwischen den Schnittstellen des Zug-Fahrzeug und Anhänger-Fahrzeugs über die Twisted-Pair-Kabel-Verbindung.

15. Verfahren nach Anspruch 13 oder 14, **gekennzeichnet durch** die Schritte:
mittels des Schalters wahlweise
- Aktivieren der ersten BUS-Einrichtung in Form des CAN-BUS zur Anbindung jeweils der ersten BUS-Einrichtung in Form des CAN-BUS des Datensystems des Zug-Fahrzeugs und/oder Anhänger-Fahrzeugs aneinander und
mittels des Schalters wahlweise
- Aktivieren der zweiten BUS-Einrichtung in Form des ETHERNET-BUS zur Anbindung jeweils der zweiten BUS-Einrichtung in Form des ETHERNET-BUS des Datensystems des Zug-Fahrzeugs und/oder Anhänger-Fahrzeugs aneinander.

16. Verfahren nach einem der Ansprüche 13 bis 15, **gekennzeichnet durch** die Schritte:
- zunächst Anbinden der ersten BUS-Einrichtung in Form eines CAN-BUS und Prüfen einer möglichen Datenübertragung über den CAN-BUS.

17. Verfahren nach einem der Ansprüche 13 bis 16, **gekennzeichnet durch** die Schritte:
- zunächst Anbinden der ersten BUS-Einrichtung in Form eines CAN-BUS und Prüfen einer rechtzeitigen Datenübertragung über den CAN-BUS,
- optional zunächst Auslesen von Diagnosedaten über den CAN-BUS, wenn die Prüfung einer rechtzeitig verfügbaren Datenübertragung über den CAN-BUS positiv ist,
- danach bedarfsmäßiges Umschalten des Schalters zum Übertragen von Sensordaten über den ETHERNET-BUS, wenn die Prüfung einer möglichen verfügbaren Datenübertragung über den ETHERNET-BUS positiv ist.

18. Verfahren nach einem der Ansprüche 13 bis 17, **gekennzeichnet durch** die Schritte:
- optional direktes Umschalten des Schalters zum Übertragen von Sensordaten über den ETHERNET-BUS, wenn die Prüfung einer rechtzeitig verfügbaren Datenübertragung über den CAN-BUS negativ ist.

19. Verfahren nach einem der Ansprüche 13 bis 18, **gekennzeichnet durch** die Schritte:
- optional Rückschalten des Schalters zum Übertragen von Sensordaten über den CAN-BUS,
wenn die Prüfung einer rechtzeitig verfügbaren Datenübertragung über den ETHERNET-BUS negativ ist, und/oder
wenn die Prüfung einer rechtzeitigen Datenübertragung über den CAN-BUS positiv ist.

20. Zug-Fahrzeug und/oder Anhänger-Fahrzeug, insbesondere für Nutzfahrzeuge wie ein Lastkraftwagen und Anhänger oder ein Personenbus und Anhänger, wobei das Zug-Fahrzeug und/oder Anhänger-Fahrzeug jeweils ein Datensystem nach einem der Ansprüche 1 bis 9 oder ein Datenübertragungssystem nach einem der Ansprüche 10 bis 12 aufweist bzw. für ein Verfahren zur Datenübertragung nach einem der Ansprüche 13 bis 19 für ein Zug-Fahrzeug und Anhänger-Fahrzeug ausgebildet ist.

## Claims

1. Data system of a towing vehicle (1) and/or trailer vehicle (2), in particular for commercial vehicles such as a truck or truck trailer or a passenger bus or passenger bus trailer, comprising:
- a control device,
- a sensor system for recording and processing sensor data,
- a BUS system for transferring the sensor data between the control device and the sensor system,
- an interface of the BUS system for transferring the sensor data to an interface of a BUS system of a respective other data system of the towing vehicle (1) and/or trailer vehicle (2) within the framework of a data transmission system (100), wherein
- the BUS system comprises a first BUS device in the form of a CAN BUS, and
- the BUS system comprises a second BUS device in the form of an ETHERNET BUS,
**characterized in that**
- the data system of the towing vehicle (1) and/or trailer vehicle (2) further comprises in each case an intelligent switch, which is coupled to the control device and/or the interface and is designed to activate the second BUS device in the form of an ETHERNET BUS in order to couple the towing vehicle and the trailer vehicle by means of the ETHERNET BUS in a coordinated manner when necessary, wherein
the switch -- independently of the interface or as an interface switch forming the interface -- is connected to an intelligent decision logic and/or a control device of the towing vehicle and/or trailer vehicle.

2. Data system according to claim 1, **characterized in that** the switch is designed selectively
- to activate the first BUS device in the form of the CAN BUS in order to connect in each case the first BUS device in the form of the CAN BUS of the data system of the towing vehicle and/or trailer vehicle to one another, wherein the switch is designed selectively
- to activate the second BUS device in the form of the ETHERNET BUS in order to connect in each case the second BUS device in the form of the ETHERNET BUS of the data system of the towing vehicle and/or trailer vehicle to one another.

3. Data system according to claim 1 or 2, **characterized in that**
the interface is designed selectively
- to couple the first BUS device of the towing vehicle and of the trailer vehicle by means of the CAN BUS, or
- to couple the towing vehicle and the trailer vehicle by means of the ETHERNET BUS.

4. Data system according to any one of the preceding claims, **characterized in that**
the BUS system comprises:
- a vehicle BUS, in particular a towing vehicle BUS of the towing vehicle and/or an expansion BUS of the trailer vehicle,
- an ISO CAN BUS, in particular a towing vehicle ISO CAN BUS of the towing vehicle and/or an expansion ISO CAN BUS of the trailer vehicle,
- an automotive ETHERNET BUS, in particular an automotive towing vehicle ETHERNET BUS of the towing vehicle and/or an expansion ETHERNET BUS of the trailer vehicle.

5. Data system according to claim 4, **characterized in that**
the BUS system comprises:
- in addition to the ISO CAN BUS, a non-ISO CAN BUS, in particular a towing vehicle non-ISO CAN BUS of the towing vehicle and/or an expansion non-ISO CAN BUS of the trailer vehicle, and/or
- in addition to the automotive ETHERNET BUS, a PoDL communication connection, in particular an automotive towing vehicle PoDL communication connection of the towing vehicle and/or an expansion PoDL communication connection of the trailer vehicle.

6. Data system according to any one of the preceding claims, **characterized in that**
the sensor data comprise:
- multimedia sensor data from a plurality of recording devices that sense the vehicle environment, and/or
- complex sensor data from a plurality of vehicle devices relating to the vehicle.

7. Data system according to any one of the preceding claims, **characterized in that**
the BUS system is integrated in the vehicle in each case as a complete system, in particular in each case as a single BUS system.

8. Data system according to any one of the preceding claims, **characterized in that**
the BUS system is fitted in the vehicle in each case as a retrofit system, in particular in addition to another CAN BUS system that already exists.

9. Data system according to any one of the preceding claims, **characterized in that**
the switch, as an interface switch, forms the interface, in particular as a parallel switch or as a serial switch.

10. Data transmission system (100), comprising a data system according to any one of claims 1 to 9 in each case for a towing vehicle and/or trailer vehicle, in particular for commercial vehicles such as a truck and trailer or a passenger bus and trailer, wherein the data system of the towing vehicle and/or trailer vehicle comprises in each case:
- a control device,
- a sensor system for recording and processing sensor data,
- a BUS system for transferring the sensor data between the control device and the sensor system,
- an interface of the BUS system for transferring the sensor data to an interface of a BUS system of the respective other data system of the towing vehicle and/or trailer vehicle within the framework of the data transmission system, and
the data transmission system comprises:
- a data connection between the interface of the towing vehicle and the interface of the trailer vehicle, wherein
- the BUS system comprises in each case the first BUS device in the form of a CAN BUS,
- the BUS system comprises in each case a second BUS device in the form of an ETHERNET BUS, and
- the data system of the towing vehicle and/or trailer vehicle further comprises in each case an intelligent switch, which is coupled to the control device and/or the interface and is designed to activate the second BUS device in the form of an ETHERNET BUS in order to couple the towing vehicle and the trailer vehicle by means of the ETHERNET BUS in a coordinated manner when necessary, and
- the data connection between the interfaces of the towing vehicle and trailer vehicle is designed as a twisted-pair cable connection.

11. Data transmission system according to claim 10, **characterized in that** the interface is switched via the switch such that
- the sensor data can be transmitted to the respective other BUS system of the data system of the towing vehicle and/or trailer vehicle within the framework of the data transmission system
- via the second BUS device in the form of the ETHERNET BUS if the towing vehicle and trailer vehicle both have an ETHERNET BUS, and/or
- via the first BUS device in the form of the CAN BUS if the towing vehicle and/or the trailer vehicle have an ETHERNET BUS that proves to be inadequate.

12. Data transmission system according to claim 10 or 11, **characterized in that**
a transmission measurement unit is designed
- to test the data connection between the interfaces of the towing vehicle and/or trailer vehicle, and
- to transmit a test result to a decision logic and/or a control device in order to actuate the switch.

13. Method for transmitting data using a respective data system for a towing vehicle (1) and/or trailer vehicle (2), in particular for commercial vehicles such as a truck and trailer or a passenger bus and trailer, wherein, within the framework of a data transmission system, the data system of the towing vehicle and/or trailer vehicle comprises in each case:
- a control device,
- a sensor system for recording and processing sensor data,
- a BUS system for transferring the sensor data between the control device and the sensor system,
- an interface of the BUS system for transferring the sensor data to an interface of a BUS system of a respective other data system of the towing vehicle and/or trailer vehicle within the framework of a data transmission system, wherein
- the BUS system comprises a first BUS device in the form of a CAN BUS,
- the BUS system comprises a second BUS device in the form of an ETHERNET BUS, and
- the data system of the towing vehicle and/or trailer vehicle further comprises in each case an intelligent switch, which is coupled to the control device and/or the interface and is designed to activate the second BUS device in the form of an ETHERNET BUS in order to couple the towing vehicle and the trailer vehicle by means of the ETHERNET BUS in a coordinated manner when necessary, wherein
the switch -- independently of the interface or as an interface switch forming the interface -- is connected to an intelligent decision logic and/or a control device of the towing vehicle and/or trailer vehicle,
and the data transmission system (100) comprises:
- a data connection between the interface of the towing vehicle and the interface of the trailer vehicle, wherein
- the data connection between the interfaces of the towing vehicle and trailer vehicle is designed as a twisted-pair cable connection,
- the method comprises the steps:
- connecting the respective second BUS device in the form of the ETHERNET BUS and testing a possible data transmission via the ETHERNET BUS,
- switching over the switch in order to transmit sensor data via the ETHERNET BUS if the testing of a possible data transmission via the ETHERNET BUS is positive for the towing vehicle and/or trailer vehicle,
- transmitting sensor data from the respective second BUS device between the interfaces of the towing vehicle and trailer vehicle via the twisted-pair cable connection.

14. Method according to claim 13, **characterized by** the steps:
- optionally transmitting sensor data from the respective first BUS device between the interfaces of the towing vehicle and trailer vehicle via the twisted-pair cable connection.

15. Method according to claim 13 or 14, **characterized by** the steps:
by means of the switch, selectively
- activating the first BUS device in the form of the CAN BUS in order to connect in each case the first BUS device in the form of the CAN BUS of the data system of the towing vehicle and/or trailer vehicle to one another, and
by means of the switch, selectively
- activating the second BUS device in the form of the ETHERNET BUS in order to connect in each case the second BUS device in the form of the ETHERNET BUS of the data system of the towing vehicle and/or trailer vehicle to one another.

16. Method according to any one of claims 13 to 15, **characterized by** the steps:
- first connecting the first BUS device in the form of a CAN BUS and testing a possible data transmission via the CAN BUS.

17. Method according to any one of claims 13 to 16, **characterized by** the steps:
- first connecting the first BUS device in the form of a CAN BUS and testing a timely data transmission via the CAN BUS,
- optionally first reading diagnostic data via the CAN BUS if the testing of a timely available data transmission via the CAN BUS is positive,
- then switching over the switch, when necessary, in order to transmit sensor data via the ETHERNET BUS if the testing of a possible available data transmission via the ETHERNET BUS is positive.

18. Method according to any one of claims 13 to 17, **characterized by** the steps:
- optionally directly switching over the switch in order to transmit sensor data via the ETHERNET BUS if the testing of a timely available data transmission via the CAN BUS is negative.

19. Method according to any one of claims 13 to 18, **characterized by** the steps:
- optionally switching back the switch in order to transmit sensor data via the CAN BUS,
if the testing of a timely available data transmission via the ETHERNET BUS is negative, and/or
if the testing of a timely data transmission via the CAN BUS is positive.

20. Towing vehicle and/or trailer vehicle, in particular for commercial vehicles such as a truck and trailer or a passenger bus and trailer, wherein the towing vehicle and/or trailer vehicle comprises in each case a data system according to any one of claims 1 to 9 or a data transmission system according to any one of claims 10 to 12 and/or is designed for a data transmission method according to any one of claims 13 to 19 for a towing vehicle and trailer vehicle.

## Revendications

1. Système de données d'un véhicule tracteur (1) et/ou d'un véhicule tracté (2) en particulier pour des véhicules utilitaires tels un poids lourd ou une remorque de poids lourd ou un minibus ou une remorque de minibus, qui présente :
- un équipement de commande,
- un système de capteur pour enregistrer et traiter des données de capteur,
- un système BUS pour transmettre les données de capteur entre l'équipement de commande et le système de capteur,
- une interface du système BUS pour transmettre les données de capteur à une interface d'un système BUS d'un autre système de données respectif du véhicule tracteur (1) et/ou du véhicule tracté (2) dans le cadre d'un système de transmission de données (100), dans lequel
- le système BUS présente un premier équipement BUS sous la forme d'un BUS CAN, et
- le système BUS présente un second équipement BUS sous la forme d'un BUS ETHERNET,
**caractérisé en ce que**
- le système de données du véhicule tracteur (1) et/ou du véhicule tracté (2) présente en outre respectivement un commutateur intelligent couplé à l'équipement de commande et/ou à l'interface, lequel commutateur est conçu pour un couplage coordonné en fonction des besoins du véhicule tracteur et du véhicule tracté au moyen du BUS ETHERNET, afin d'activer le second équipement BUS sous la forme d'un BUS ETHERNET, dans lequel
le commutateur - indépendamment de l'interface ou formant l'interface en tant que commutateur d'interfaces - est relié à une logique de décision intelligente et/ou à un équipement de commande du véhicule tracteur et/ou du véhicule tracté.

2. Système de données selon la revendication 1, **caractérisé en ce que**
le commutateur est conçu pour, au choix
- activer le premier équipement BUS sous la forme du BUS CAN afin de relier respectivement le premier équipement BUS sous la forme du BUS CAN du système de données du véhicule tracteur et/ou du véhicule tracté l'un à l'autre, dans lequel le commutateur est conçu pour, au choix
- activer le second équipement BUS sous la forme du BUS ETHERNET afin de relier respectivement le second équipement BUS sous la forme du BUS ETHERNET du système de données du véhicule tracteur et/ou du véhicule tracté l'un à l'autre.

3. Système de données selon la revendication 1 ou 2, **caractérisé en ce que**
l'interface est conçue au choix
- pour coupler le premier équipement BUS du véhicule tracteur et du véhicule tracté au moyen du BUS CAN, ou
- pour coupler le véhicule tracteur et le véhicule tracté au moyen du BUS ETHERNET.

4. Système de données selon l'une des revendications précédentes, **caractérisé en ce que**
le système BUS présente :
- un BUS de véhicule, en particulier un BUS de véhicule tracteur du véhicule tracteur et/ou un BUS d'extension du véhicule tracté,
- un BUS CAN ISO, en particulier un BUS-CAN-ISO de véhicule tracteur du véhicule tracteur et/ou un BUS CAN ISO d'extension du véhicule tracté,
- un BUS ETHERNET automobile, en particulier un BUS ETHERNET de véhicule tracteur automobile du véhicule tracteur et/ou un BUS ETHERNET d'extension du véhicule tracté.

5. Système de données selon la revendication 4, **caractérisé en ce que**
le système BUS présente :
- en plus du BUS CAN ISO, un BUS CAN non ISO, en particulier un BUS CAN non ISO de véhicule tracteur du véhicule tracteur et/ou un BUS CAN non ISO d'extension du véhicule tracté, et/ou
- en plus du BUS ETHERNET automobile, une ligne de communication PoDL, en particulier une ligne de communication PoDL de véhicule tracteur automobile du véhicule tracteur et/ou une ligne de communication PoDL d'extension du véhicule tracté.

6. Système de données selon l'une des revendications précédentes, **caractérisé en ce que**
les données de capteur comprennent :
- des données de capteur multimédias d'une pluralité d'enregistreurs qui détectent l'environnement de véhicule, et/ou
- des données de capteur complexes d'une pluralité d'enregistreurs concernant le véhicule.

7. Système de données selon l'une des revendications précédentes, **caractérisé en ce que**
le système BUS est intégré dans le véhicule respectivement en tant que système global, en particulier respectivement en tant qu'unique système BUS.

8. Système de données selon l'une des revendications précédentes, **caractérisé en ce que**
le système BUS est placé dans le véhicule respectivement en tant que système d'équipement ultérieur, en particulier en plus d'un autre système BUS CAN qui existe déjà.

9. Système de données selon l'une des revendications précédentes, **caractérisé en ce que**
le commutateur forme l'interface en tant que commutateur d'interfaces, en particulier en tant que commutateur parallèle ou commutateur sériel.

10. Système de transmission de données (100) avec respectivement un système de données selon l'une des revendications 1 à 9 respectivement pour un véhicule tracteur et/ou un véhicule tracté, en particulier pour des véhicules utilitaires tels un poids lourd et remorque ou un minibus et remorque, dans lequel le système de données du véhicule tracteur et/ou du véhicule tracté présente respectivement :
- un équipement de commande,
- un système de capteur pour enregistrer et traiter des données de capteur,
- un système BUS pour transmettre les données de capteur entre l'équipement de commande et le système de capteur,
- une interface du système BUS pour transmettre les données de capteur à une interface d'un système BUS de l'autre système de données respectif du véhicule tracteur et/ou du véhicule tracté dans le cadre du système de transmission de données, et
le système de transmission de données présente :
- une liaison de données entre l'interface du véhicule tracteur et l'interface du véhicule tracté, dans lequel
- le système BUS présente respectivement le premier équipement BUS sous la forme d'un BUS CAN,
- le système BUS présente respectivement un second équipement BUS sous la forme d'un BUS ETHERNET, et
- le système de données du véhicule tracteur et/ou du véhicule tracté présente en outre respectivement un commutateur intelligent couplé à l'équipement de commande et/ou à l'interface, lequel commutateur est conçu pour un couplage coordonné en fonction des besoins du véhicule tracteur et du véhicule tracté au moyen du BUS ETHERNET, afin d'activer le second équipement BUS sous la forme d'un BUS ETHERNET, et
- la liaison de données entre les interfaces du véhicule tracteur et du véhicule tracté est conçue en tant que liaison par câble à paires torsadées.

11. Système de transmission de données selon la revendication 10, **caractérisé en ce que** l'interface est commutée via le commutateur de telle sorte que
- les données de capteur puissent être transmises à l'autre système BUS respectif du système de données du véhicule tracteur et/ou du véhicule tracté dans le cadre du système de transmission de données,
- via le second équipement BUS sous la forme du BUS ETHERNET, pour autant que le véhicule tracteur et le véhicule tracté disposent tous deux d'un BUS ETHERNET, et/ou
- via le premier équipement BUS sous la forme du BUS CAN, pour autant que le véhicule tracteur et/ou le véhicule tracté disposent tous deux d'un BUS ETHERNET qui s'avère insuffisant.

12. Système de transmission de données selon la revendication 10 ou 11, **caractérisé en ce que**
une unité de mesure de transmission est conçue
- pour vérifier la liaison de données entre les interfaces du véhicule tracteur et/ou du véhicule tracté, et
- pour transmettre un résultat de vérification à une logique de décision et/ou à un équipement de commande afin d'actionner le commutateur.

13. Procédé de transmission de données avec respectivement un système de données respectivement pour un véhicule tracteur (1) et/ou un véhicule tracté (2), en particulier pour des véhicules utilitaires tels un poids lourd et remorque ou un minibus et remorque, dans lequel dans le cadre d'un système de transmission de données le système de données du véhicule tracteur et/ou du véhicule tracté présente respectivement :
- un équipement de commande,
- un système de capteur pour enregistrer et traiter des données de capteur,
- un système BUS pour transmettre les données de capteur entre l'équipement de commande et le système de capteur,
- une interface du système BUS pour transmettre les données de capteur à une interface d'un système BUS d'un autre système de données respectif du véhicule tracteur et/ou du véhicule tracté dans le cadre du système de transmission de données, dans lequel
- le système BUS présente un premier équipement BUS sous la forme d'un BUS CAN,
- le système BUS présente un second équipement BUS sous la forme d'un BUS ETHERNET, et
- le système de données du véhicule tracteur et/ou du véhicule tracté présente en outre respectivement un commutateur intelligent couplé à l'équipement de commande et/ou à l'interface, lequel commutateur est conçu pour un couplage coordonné en fonction des besoins du véhicule tracteur et du véhicule tracté au moyen du BUS ETHERNET, afin d'activer le second équipement BUS sous la forme d'un BUS ETHERNET, dans lequel
le commutateur - indépendamment de l'interface ou formant l'interface en tant que commutateur d'interfaces - est relié à une logique de décision intelligente et/ou à un équipement de commande du véhicule tracteur et/ou du véhicule tracté,
et le système de transmission de données (100) présente :
- une liaison de données entre l'interface du véhicule tracteur et l'interface du véhicule tracté, dans lequel
- la liaison de données entre les interfaces du véhicule tracteur et du véhicule tracté est conçue en tant que liaison par câble à paires torsadées,
- le procédé présente les étapes consistant à :
- relier le second équipement BUS respectif sous la forme du BUS ETHERNET et vérifier une possible transmission de données via le BUS ETHERNET,
- permuter le commutateur pour transmettre des données de capteur via le BUS ETHERNET lorsque la vérification d'une possible transmission de données via le BUS ETHERNET pour le véhicule tracteur et/ou le véhicule tracté est positive,
- transmettre des données de capteur depuis le second équipement BUS respectif entre les interfaces du véhicule tracteur et du véhicule tracté via la liaison par câble à paires torsadées.

14. Procédé selon la revendication 13, **caractérisé par** les étapes consistant à :
- transmettre de façon optionnelle des données de capteur depuis le premier équipement BUS respectif entre les interfaces du véhicule tracteur et du véhicule tracté via la liaison par câble à paires torsadées.

15. Procédé selon la revendication 13 ou 14, **caractérisé par** les étapes consistant à :
au moyen du commutateur, au choix
- activer le premier équipement BUS sous la forme du BUS CAN pour relier respectivement le premier équipement BUS sous la forme du BUS CAN du système de données du véhicule tracteur et/ou du véhicule tracté l'un à l'autre, et au moyen du commutateur, au choix
- activer le second équipement BUS sous la forme du BUS ETHERNET pour relier respectivement le second équipement BUS sous la forme du BUS ETHERNET du système de données du véhicule tracteur et/ou du véhicule tracté l'un à l'autre.

16. Procédé selon l'une des revendications 13 à 15, **caractérisé par** les étapes consistant à :
- d'abord relier le premier équipement BUS respectif sous la forme d'un BUS CAN et vérifier une possible transmission de données via le BUS CAN.

17. Procédé selon l'une des revendications 13 à 16, **caractérisé par** les étapes consistant à :
- d'abord relier le premier équipement BUS sous la forme d'un BUS CAN et vérifier une transmission de données en temps utile via le BUS CAN,
- de façon optionnelle d'abord lire des données de diagnostic via le BUS CAN lorsque la vérification d'une transmission de données disponible en temps utile via le BUS CAN est positive,
- ensuite en fonction des besoins permuter le commutateur pour transmettre des données de capteur via le BUS ETHERNET lorsque la vérification d'une possible transmission de données disponible via le BUS ETHERNET est positive.

18. Procédé selon l'une des revendications 13 à 17, **caractérisé par** les étapes consistant à :
- de façon optionnelle permuter directement le commutateur pour transmettre des données de capteur via le BUS ETHERNET lorsque la vérification d'une transmission de données disponible en temps utile via le BUS CAN est négative.

19. Procédé selon l'une des revendications 13 à 18, **caractérisé par** les étapes consistant à :
- de façon optionnelle commuter en arrière le commutateur pour transmettre des données de capteur via le BUS CAN,
lorsque la vérification d'une transmission de données disponible en temps utile via le BUS ETHERNET est négative, et/ou
lorsque la vérification d'une transmission de données en temps utile via le BUS CAN est positive.

20. Véhicule tracteur et/ou véhicule tracté, en particulier pour des véhicules utilitaires tels un poids lourd et remorque ou un minibus et remorque, dans lequel le véhicule tracteur et/ou le véhicule tracté présente respectivement un système de données selon l'une des revendications 1 à 9 ou un système de transmission de données selon l'une des revendications 10 à 12 ou est conçu pour un procédé de transmission de données selon l'une des revendications 13 à 19 pour un véhicule tracteur et un véhicule tracté.
